# EUROPEAN PATENT SPECIFICATION

(11) **EP 4 235 356 B1**
(45) Date of publication and mention of the grant of the patent: **18.02.2026**
(21) Application number: 21900922.2
(22) Date of filing: 25.11.2021
(51) Int. Cl.: G06F 1/16, G09F 9/30

(54) **ROLLABLE ELECTRONIC DEVICE AND METHOD FOR OPERATING SAME**
ROLLBARE ELEKTRONISCHE VORRICHTUNG UND VERFAHREN ZUM BETRIEB DAVON
DISPOSITIF ÉLECTRONIQUE ENROULABLE ET SON PROCÉDÉ DE FONCTIONNEMENT

(30) Priority: 02.12.2020 KR 20200166736; 21.05.2021 KR 20210065487
(43) Date of publication of application: 30.08.2023
(73) Proprietor: Samsung Electronics Co., Ltd., Suwon-si, Gyeonggi-do 16677 (KR)
(72) Inventor: JUNG, Minsu, Suwon-si, Gyeonggi-do 16677 (KR); NOH, Daeyoung, Suwon-si, Gyeonggi-do 16677 (KR)
(74) Representative: Gulde & Partner
(86) International application number: PCT/KR2021/017500
(87) International publication number: WO 2022/119234

(56) References cited:
- KR-A- 20160 141 255
- KR-A- 20180 005 316
- KR-B1- 101 570 869
- US-A1- 2015 002 398
- US-A1- 2017 278 436
- US-A1- 2019 371 505
- US-A1- 2020 363 841

## Description

### [Technical Field]

The present disclosure relates to a rollable electronic device and a method of operating the same.

### [Background Art]

Electronic devices are gradually becoming slimmer, and are being improved in order to increase rigidity, enhance design aspects, and differentiate functional elements thereof. Electronic devices are being gradually transformed from a uniform rectangular shape into various shapes. An electronic device may have a transformable structure that is capable of using a large-screen display while being convenient to carry. For example, as an example of a transformable structure, an electronic device may have a structure that makes the display area of a flexible display variable by supporting housings that operate in a sliding manner with respect to each other (e.g., a rollable structure or a slidable structure). The rollable electronic device is configured such that a rollable display is capable of being rolled or unrolled, and the slidable electronic device is configured such that a screen is capable of being expanded and contracted by moving the flexible display in a sliding manner.

The above information is presented as background information only to assist with an understanding of the disclosure. No determination or assertion is made as to whether any of the above might be applicable as prior art with regard to the disclosure.

### [Disclosure of Invention]

### [Technical Problem]

In the rollable electronic device, the screen may be manually, semi-automatically, or automatically expanded and contracted. The rollable electronic device may include a motor to semi-automatically or automatically expand and contract the screen. The motor may include a structure that interlocks the rotation shaft of the motor and the driving of the display, and may be complicated in structure. In addition, in order to increase a display area, increase rate during screen expansion and contraction, the overall length of the display may be increased, and one motor for driving one end of a shaft or two motors for driving both ends of a shaft may be applied. The driving force of the motor is concentrated at an end of the display in the entire length direction, and the driving trajectory deviation of the display itself may occur due to the deformation of multiple bars in the middle portion of the display, which are not directly driven, and a defect in which the middle area of the display is lifted may occur. Such conventional devices are disclosed in US2020/363841A1.

Embodiments of the disclosure address at least the problems and/or disadvantages described above and provide at least the advantages described below.

Various embodiments of the disclosure are intended to provide an electronic device that is capable of stably performing screen expansion and screen contraction of a display.

The technical subjects pursued in the disclosure may not be limited to the above mentioned technical subjects, and other technical subjects which are not mentioned may be clearly understood, through the following descriptions, by those skilled in the art to which the disclosure pertains.

Additional aspects will be partially described in the following description, will be partially apparent from the description, or will be understood by implementing the presented embodiments.

### [Solution to Problem]

The present invention is defined by the appended set of claims. An electronic device according to various embodiments of the disclosure may include a flexible display, a support member, a shaft bracket, a coil assembly, and a printed circuit board. The flexible display may include a first area disposed to be visible from outside, and a second area extending from the first area, accommodated inside in a slide-in state, and disposed to be visible from outside in a slide-out state. The support member may be disposed on the rear surface of the flexible display to support the flexible display in the slide-in state and the slide-out state. The shaft bracket may be disposed below the support member. The coil assembly may be coupled to one side of the shaft bracket and may be configured to generate a driving force for moving the support member in a first direction or in a second direction opposite to the first direction. The coil assembly is disposed to correspond to a central portion of the flexible display. An electronic component configured to supply a driving current to the coil assembly may be disposed on the printed circuit board.

### [Advantageous Effects of Invention]

In an electronic device according to various embodiments of the disclosure, a coil actuator is disposed to correspond to the central portion of a display so that a driving force is transmitted to a wide area of the display. As a result, it is possible to prevent the display from being deformed due to concentration of the driving force for screen expansion or screen contraction of the display.

An electronic device according to various embodiments of the disclosure generates a driving for screen expansion or screen contraction of a display by using electromagnet coils and the multiple bars. As a result, it is possible to increase a driving output by increasing the areas of the electromagnet coils and the multiple bars.

An electronic device according to various embodiments of the disclosure does not require a separate motor for screen expansion or screen contraction of a display. As a result, it is possible to increase the diameter of an electromagnet actuator for circular driving.

In addition to this, various effects identified directly or indirectly through this document may be provided.

Other aspects, advantages, and salient features of the disclosure will become apparent to those skilled in the art from the following detailed description disclosing various embodiments of the disclosure with reference to the accompanying drawings.

### [Brief Description of Drawings]

In connection with the description of the drawings, the same or similar components may be denoted by the same or similar reference numerals.
FIG. 1 is a block diagram illustrating an electronic device according to various embodiments of the disclosure within a network environment.
FIG. 2 is an example illustrating expansion and contraction of a display of a rollable electronic device according to various embodiments of the disclosure.
FIG. 3 is a view illustrating front and rear surfaces of a rollable electronic device according to various embodiments of the disclosure.
FIG. 4A is an exploded perspective view of a housing, components, and a back cover of a rollable electronic device according to various embodiments of the disclosure.
FIG. 4B is an exploded perspective view of a sliding assembly and the housing of the rollable electronic device according to various embodiments of the disclosure.
FIG. 4C is a view illustrating the housing, the back cover, and a slit plate of the rollable electronic device according to various embodiments of the disclosure.
FIG. 4D is a view illustrating the components and a display of the rollable electronic device according to various embodiments of the disclosure.
FIG. 5 is a view illustrating the display module of the rollable electronic device according to various embodiments of the disclosure.
FIG. 6 is a perspective view illustrating a slide plate, a shaft bracket, and a coil assembly of a rollable electronic device according to various embodiments of the disclosure.
FIG. 7 is a view illustrating a shaft bracket of the rollable electronic device according to various embodiments of the disclosure.
FIG. 8 is a view illustrating a coil assembly of the rollable electronic device according to various embodiments of the disclosure.
FIG. 9 is a view illustrating a support member of a rollable electronic device according to various embodiments of the disclosure.
FIG. 10 is a view illustrating assembly of a driving gear and a gear cover of a rollable electronic device according to various embodiments of the disclosure.
FIG. 11 is a view illustrating a support member of a rollable electronic device according to various embodiments of the disclosure.
FIG. 12 is a view illustrating cross sectionals of a display and a support member of a rollable electronic device according to various embodiments of the disclosure.
FIG. 13 is a view illustrating that the display is supported by the support member.
FIG. 14 is a perspective view of a coil assembly of a rollable electronic device according to various embodiments of the disclosure.
FIG. 15 is a cross-sectional view of a coil assembly of a rollable electronic device according to various embodiments of the disclosure.
FIG. 16 is a view illustrating the coil assembly coupled to the shaft bracket.
FIG. 17 is a perspective view illustrating a connection structure between the coil assembly and the printed circuit board.
FIG. 18 is a cross-sectional view illustrating a connection structure between the coil assembly and the printed circuit board.
FIG. 19 is a view illustrating a cross section of an electronic device in which a display, a support member, and a coil assembly are coupled.
FIGS. 20 to 22 are views illustrating a method of expanding (e.g., slide-out) (e.g., screen expansion) (e.g., slide-open) a display of a rollable electronic device according to various embodiments of the disclosure.

It should be noted that throughout the drawings, the same reference numbers are used to describe the same or similar elements, features, and structures.

### [Mode for the Invention]

The following description with reference to the accompanying drawings is provided to assist in comprehensive understanding of an embodiment of the disclosure as defined by the appended claims thereof. The description includes various specific details to assist in the understanding, but the details are to be regarded merely as examples. Accordingly, those skilled in the art will recognize that various changes and modifications may be made to an embodiment set forth herein without departing from the scope of the disclosure. In addition, descriptions of well-known functions and configurations may be omitted for the sake of clarity and conciseness.

The terms and words used in the following description and the appended claims are not limited to the bibliographical meanings thereof, but are merely used by the inventors to enable clear and consistent understanding of the disclosure. Accordingly, it will be apparent to those skilled in the art that the following description of various embodiments of the disclosure is not intended to limit the disclosure as defined by the appended claims thereof, but is provided merely for the purpose of illustration.

It is to be understood that the expressions in singular forms include plural referents unless the context clearly dictates otherwise. Therefore, for example, reference to "a component surface" includes reference to one or more such surfaces.

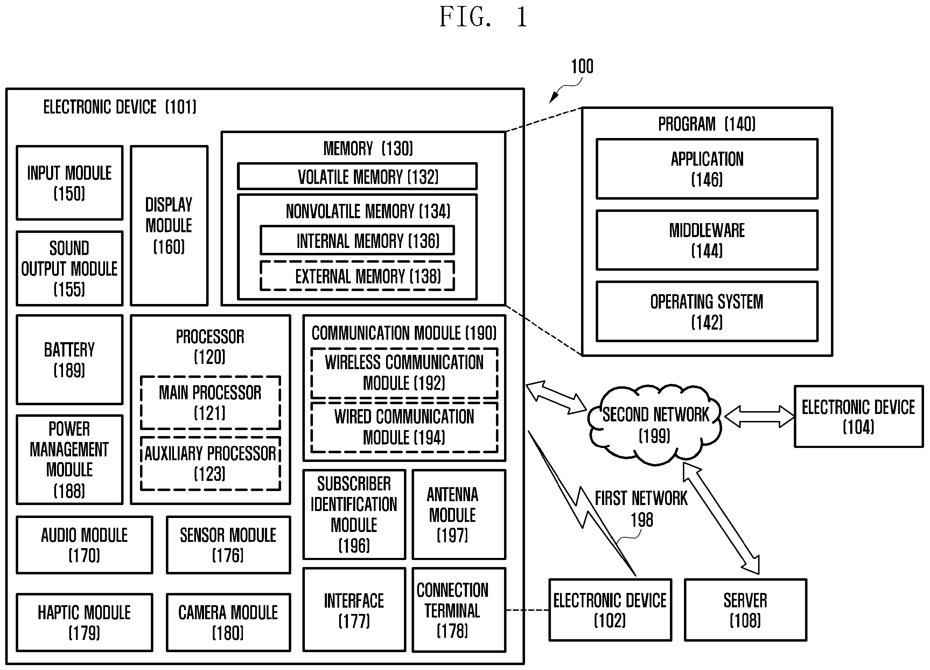

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit, a neural processing unit (NPU), an image signal processor, a sensor hub processor, or a communication processor) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control, for example, at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active (e.g., executing an application) state. According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence model is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or an external electronic device (e.g., an electronic device 102 (e.g., a speaker or a headphone)) directly or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly or wirelessly. According to an embodiment, the interface 177 may include, for example, a high definition multimedia interface (HDMI), a universal serial bus (USB) interface, a secure digital (SD) card interface, or an audio interface.

The connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the external electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or loT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B", "at least one of A and B", "at least one of A or B", "A, B, or C", "at least one of A, B, and C", and "at least one of A, B, or C", may include any one of, or all possible combinations of the items enumerated together in a corresponding one of the phrases. As used herein, such terms as "1st" and "2nd", or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with/to" or "connected with/to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic", "logic block", "part", or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components or operations may be omitted, or one or more other components or operations may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

According to an embodiment, the display module 160 illustrated in FIG. 1 may include a flexible display configured to be foldable or unfoldable.

According to an embodiment, the display module 160 illustrated in FIG. 1 may include a flexible display that is slidably arranged to provide a screen (e.g., a display screen).

For example, the display area of the electronic device 101 is an area that is visually exposed to output an image, and the electronic device 101 may be configured such that the display area of the display is adjustable according to the movement of the sliding plate (not illustrated) or the movement of the display. A rollable-type electronic device configured to selectively expand a display area by at least partially operating at least a portion (e.g., the housing) of the electronic device 101 in a sliding manner may be an example that includes such a display module 160. For example, the display module 160 may be referred to as a slide-out display or an expandable display.

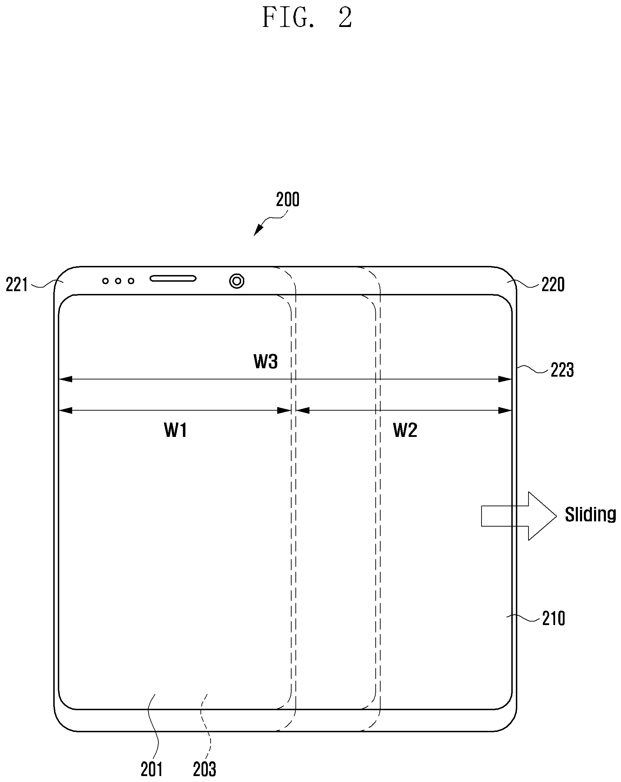

FIG. 2 is an example illustrating expansion and contraction of a display of a rollable electronic device 200 according to various embodiments of the disclosure.

Referring to FIG. 2, the rollable electronic device 200 (e.g., the electronic device 101 of FIG. 1) according to an embodiment of the disclosure may include a first plate 201 facing a first direction (e.g., the front side) and a second plate 203 facing a second direction opposite to the first direction (e.g., the rear side). The rollable electronic device 200 may include housings 221 and 223 that define a space between the first plate 201 and the second plate 203 and/or a flexible display 210 (e.g., the display module 160 of FIG. 1) that is exposed through the first plate 201. Here, as the flexible display 210, an OLED display or an LCD display may be applied.

According to an embodiment, the rollable electronic device 200 may include a first housing 221 and a second housing 223.

According to an embodiment, the first housing 221 and the second housing 223 may be configured to be movable in a sliding manner. For example, the second housing 223 may be configured to be slidable in a first direction in the first housing 221. In addition, the second housing 223 may be configured to be slidable in a second direction opposite to the first direction. As an embodiment, when the second housing 223 of the rollable electronic device 200 is slid in the first direction, the flexible display 210 may be expanded, and an expanded screen (e.g., an extended area (a second area)) may be displayed. According to an embodiment, when the second housing 223 of the rollable electronic device 200 is slid in the second direction, the flexible display 210 may be contracted, and a contracted screen (e.g., a fixed area (a first area)) may be displayed.

According to an embodiment, the first housing 221 may be configured to slide in the first direction from the second housing 223. In addition, the first housing 221 may be configured to be slidable in the second direction opposite to the first direction. When the first housing 221 of the rollable electronic device 200 is slid in the first direction, the flexible display 210 may be expanded, and the expanded screen (e.g., the extended area (the second area)) may be displayed. As an embodiment, when the first housing 221 of the rollable electronic device 200 is slid in the second direction, the flexible display 210 may be contracted, and the contracted screen (e.g., the fixed area (the first area)) may be displayed.

According to an embodiment, the first housing 221 may be configured to be slidable in the first direction, and the second housing 223 may be configured to be slidable in the second direction. The first housing 221 and the second housing 223 may be relatively movable. As an embodiment, when the second housing 221 of the rollable electronic device 200 is slid in the first direction and the second housing 223 is slid in the second direction, the flexible display 210 may be expanded, and the expanded screen (e.g., the extended area (the second area)) may be displayed. In contrast, when the first housing 221 of the rollable electronic device 200 is slid in the second direction and the second housing 223 is slid in the first direction, the flexible display 210 may be contracted, and a contracted screen (e.g., a fixed area (a first area)) may be displayed.

According to an embodiment, when the second housing 223 is slid in the first direction, the second housing 223 may move to one direction of the first housing 221 by a maximum second width W2.

According to an embodiment, the flexible display 210 may be a flexible display in which the width of an area exposed to the outside is adjusted based on the movement of the second housing 223. For example, at least a portion of the flexible display 210 may be exposed to have a first width W1. The second housing 223 may move in a sliding manner, and another portion of the flexible display 210 may be further extended and exposed by the maximum second width W2. For example, the flexible display 210 may extend from the first width W1 by the second width W2 so that a third width W3 of the flexible display 210 may be exposed.

When the first width W1 of the flexible display 210 is exposed, it may be defined as a display contraction, display-in, slide-close, or slide-in state (e.g., a screen contraction state).

When the flexible display 210 is slid and the third width W3 of the flexible display 210 is exposed, it may be defined as a display expansion, display-out, slide-open, or slide-out state (e.g., a screen expansion state).

The rollable electronic device 200 may include at least one sensor module (e.g., the sensor module 176 of FIG. 1) configured to detect the screen contraction (e.g., a slide-in state, the screen size change (e.g., sliding) state, and the screen expansion (e.g., slide-out) state of the flexible display 210.

The rollable electronic device 200 may detect, by using the at least one sensor module 176, whether the flexible display 210 is in the slide-in state, the slide-out state, or the screen size change state (e.g., the sliding state (e.g., an intermediate state between the slide-in and slide-out states (e.g., an intermediate state between the screen expansion and screen contraction states))).

According to an embodiment, the screen size change state may include the state in which the slide-out does not completely progress from the screen contraction state of the flexible display 210 and a portion of the flexible display 210 is unrolled, or the state in which a portion of the flexible display 210 is being partially unrolled (e.g., the sliding state).

According to an embodiment, the screen size change state may include the state in which the slide-in does not completely progress from the screen expansion state of the flexible display 210 and a portion of the flexible display 210 is slid in, or the state in which a portion of flexible display 210 is being slid in (e.g., the sliding state).

The detection result of the at least one sensor module 176 may be transmitted to a processor (e.g., the processor 120 of FIG. 1). Based on the acquired detection result, the processor (e.g., the processor 120) may determine whether the flexible display 210 is in the slide-in state, the slide-out state, or the screen size change state (e.g., the sliding state (e.g., an intermediate state between the slide-in and slide-out states (e.g., an intermediate state between the screen expansion and screen contraction states))).

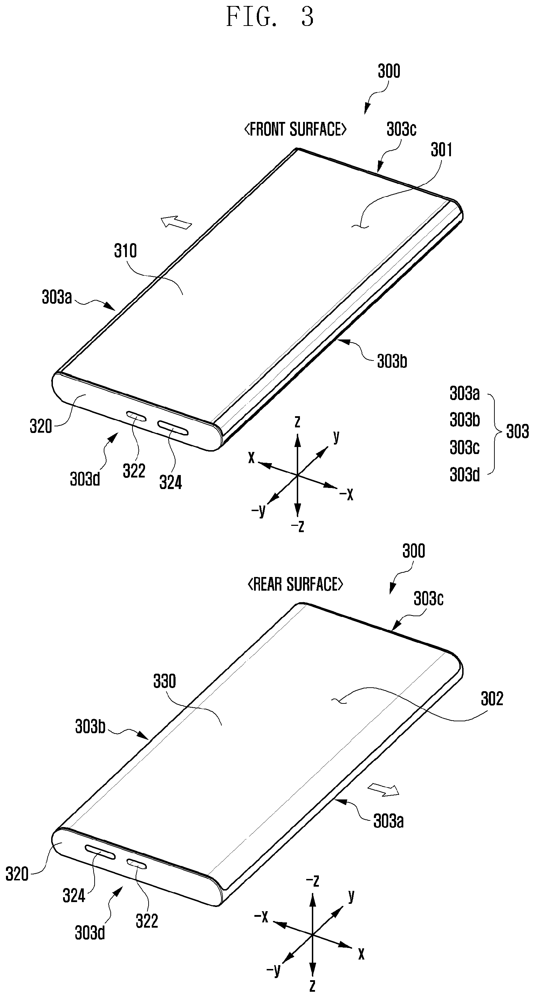

FIG. 3 is a view illustrating a front surface 301 and a rear surface 302 of a rollable electronic device 300 according to various embodiments of the disclosure.

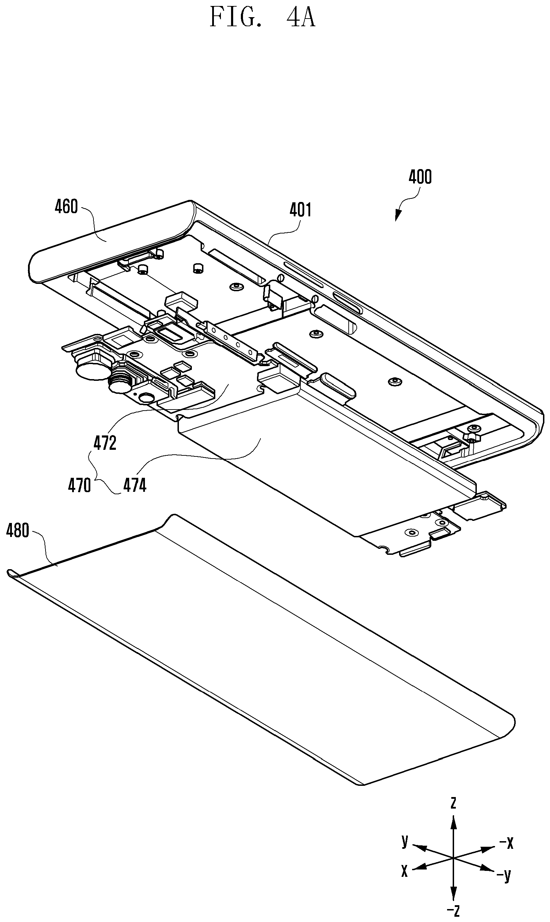

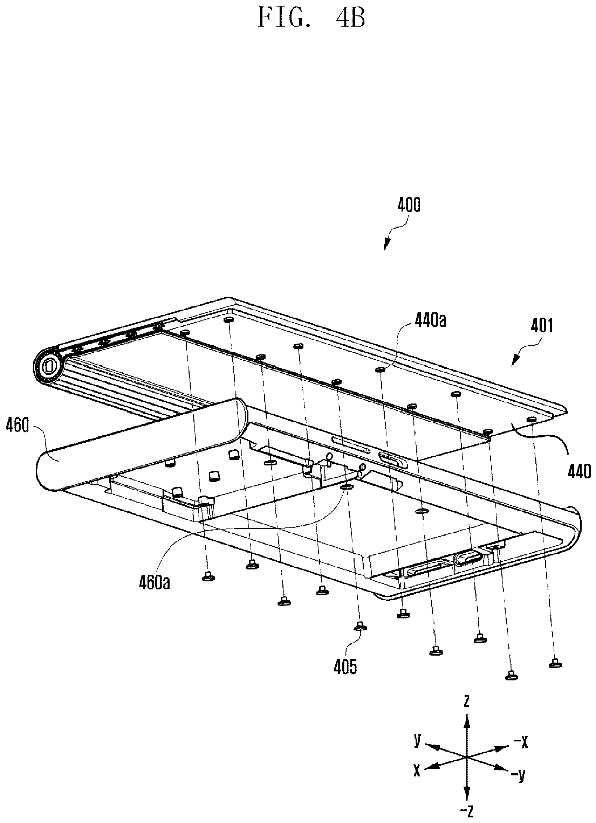

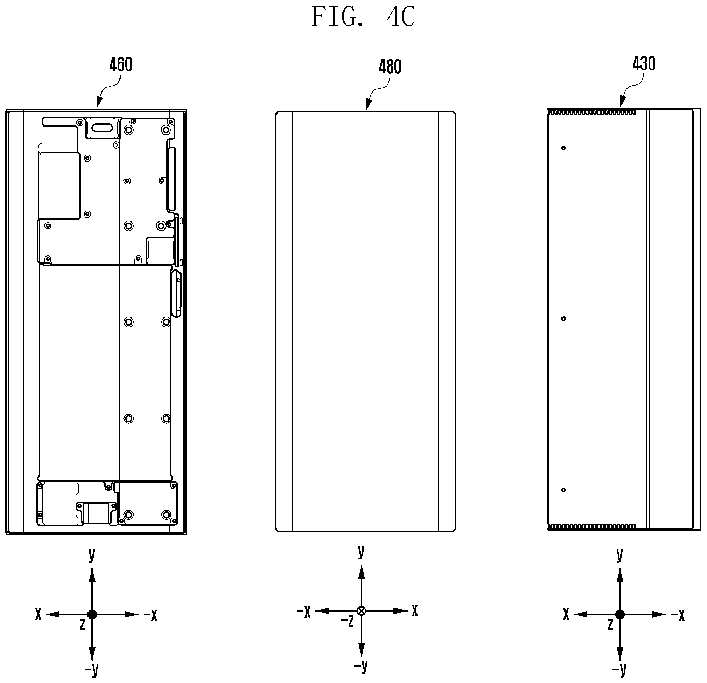

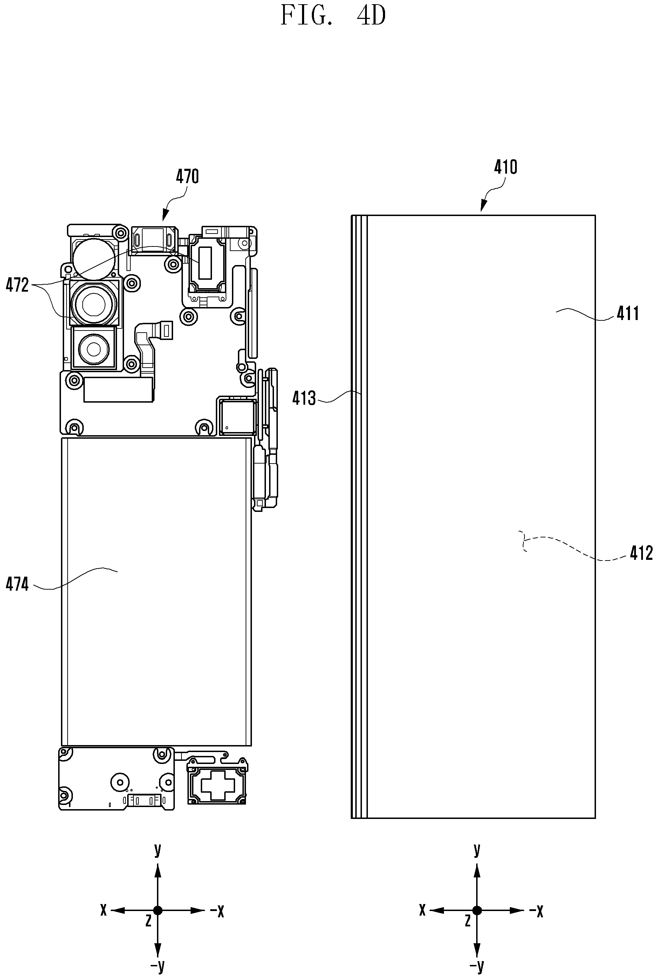

Referring to FIG. 3, the rollable electronic device 300 according to various embodiments of the disclosure may include: a display 310 (e.g., the flexible display 210 of FIG. 2 or the display module 401 of FIG. 4A); a housing 320 (e.g., the first housing 221 and the second housing 223 of FIG. 2, or the housing 460 of FIG. 4); at least one component (e.g., the component 470 of FIG. 4A); and a back cover 330 (e.g., the back cover 480 of FIG. 4).

The rollable electronic device 300 may include: a front surface 301 (e.g., the first surface) facing a first direction (e.g., the z-axis direction); a rear surface 302 (e.g., the second surface) facing a second direction (e.g., the -z-axis direction) opposite to the first direction; side surfaces 303 provided between the front surface 301 and the rear surface 302; and a predetermined surface provided between the front surface 301 and the rear surface 302. The side surfaces 303 may include: a first side surface 303a disposed at the x-axis direction; a second side surface 303b disposed at the -x-axis direction; a third side surface 303c disposed at the y-axis direction; and a fourth side surface 303d disposed at the -y-axis direction.

According to various embodiments, the rollable electronic device 300 may be slid to at least one of the x-axis direction, the -x-axis direction, the y-axis direction, and/or the -y-axis direction to expand or contract the display screen of the display 310. In various embodiments of the disclosure, as an example, the fact that the screen of the display 310 is expanded by sliding the rollable electronic device 300 to the x-axis direction and the screen of the display 310 is contracted by sliding the rollable electronic device 300 to the -x-axis direction. However, the rollable electronic device 300 is not limited thereto, and the screen of the display 310 may be expanded or contracted to the x-axis direction and the -x-axis direction (e.g., both directions with reference to the x-axis). Meanwhile, and the screen of the display 310 may be expanded or contracted to the y-axis direction and the -y-axis direction (e.g., both directions with reference to the y-axis).

According to an embodiment, the housing 320 may be made of a metal material to surround the space between the front surface 301 and the rear surface 302 of the electronic device 300. As an example, at least a portion of the housing 320 may be made of a non-metallic material. On the front surface 301 of the electronic device 300, the display 310 may be visually exposed to the outside. On the rear surface 302 of the electronic device 300, the back cover 330 may be visually exposed to the outside. The back cover 330 may be made of polymer, coated or colored glass, ceramic, polymer, metal (e.g., aluminum, stainless steel (STS), or magnesium), or a combination of at least two of these materials. In some embodiments, the back cover 330 may extend to at least some of the side surfaces 303. As an example, the back cover 330 may be made of a transparent material, and the display 310 may be visually exposed to the outside even on the rear surface 320 of the electronic device 300.

According to an embodiment, the display 310 may be disposed in a space provided by the housing 320. The housing 320 may include a connector hole 322 and an audio hole 324. As an embodiment, the connector hole 322 may accommodate a first connector configured to transmit and receive power and/or data to and from an external electronic device, and/or a second connector configured to transmit and receive an audio signal to and from an external electronic device. For example, the connector hole 322 may include a USB connector or an earphone jack. In an embodiment, the USB connector and the earphone jack may be implemented as a single hole. According to an embodiment, the electronic device 300 may transmit and receive power and/or data or an audio signal to and from an external electronic device in a wireless manner without a separate connector hole. As an example, the audio hole 324 may include a microphone hole and/or a speaker hole. As an example, the electronic device 300 may include an audio module (e.g., the audio module 170 in FIG. 1). The audio module may include a microphone configured to acquire external sound and a speaker configured to output external sound. At least a microphone and at least one speaker may be disposed inside the audio hole 324. As an embodiment, a speaker hole and a microphone hole may be implemented as a single audio hole 324, or a speaker (e.g., a piezo speaker) may be included without a speaker hole. The speaker hole may include an external speaker hole and a call receiver hole.

According to various embodiments, the rollable electronic device 300 may include at least one of an input module (e.g., the input module 150 of FIG. 1), a sound output module (e.g., the sound output module 155 of FIG. 1), a sensor module (e.g., the sensor module 176 of FIG. 1), a camera module (e.g., the camera module 180 of FIG. 1), and a connector port (e.g., the connection terminal 178 of FIG. 1). As another embodiment, the electronic device 300 may be configured such that at least one of the above-mentioned components is omitted or other components are additionally included.

As an embodiment, the sensor module (e.g., the sensor module 176 in FIG. 1) may generate an electrical signal or a data value corresponding to the internal operating state or the external environmental state of the rollable electronic device 300.

As an embodiment, the sensor module (e.g., the sensor module 176 of FIG. 1) may include a first sensor module (e.g., a proximity sensor or an illuminance sensor) disposed on the front surface 301 of the rollable electronic device 300 and/or a second sensor module (e.g., a heart rate monitoring (HRM) sensor) disposed on the rear surface 302.

As an embodiment, the first sensor module may be disposed under (e.g., below) the display 310 on the front surface 301 of the rollable electronic device 300. According to an embodiment, the first sensor module may include at least one of a proximity sensor, an illuminance sensor, a time of flight (TOF) sensor, an ultrasonic sensor, a fingerprint recognition sensor, a gesture sensor, a gyro sensor, an atmospheric pressure sensor, a magnetic sensor, an acceleration sensor, a grip sensor, a color sensor, an infrared (IR) sensor, a biometric sensor, a temperature sensor, or a humidity sensor.

According to various embodiments, the rollable electronic device 300 may include at least one antenna (e.g., the antenna module 197 of FIG. 1). According to an embodiment, the at least one antenna (e.g., the antenna module 197 of FIG. 1) may be configured to transmit and receive, for example, a signal for wirelessly communicating with an external electronic device (e.g., the electronic device 104 of FIG. 1). According to an embodiment, the rollable electronic device 300 may include another antenna disposed in the inner space thereof. According to an embodiment, the other antenna may wirelessly transmit and receive power required for charging. According to an embodiment, the at least one antenna and/or the other antenna may include a legacy antenna, a mmWave antenna, a near-field communication (NFC) antenna, a wireless charging antenna, and/or a magnetic secure transmission (MST) antenna.

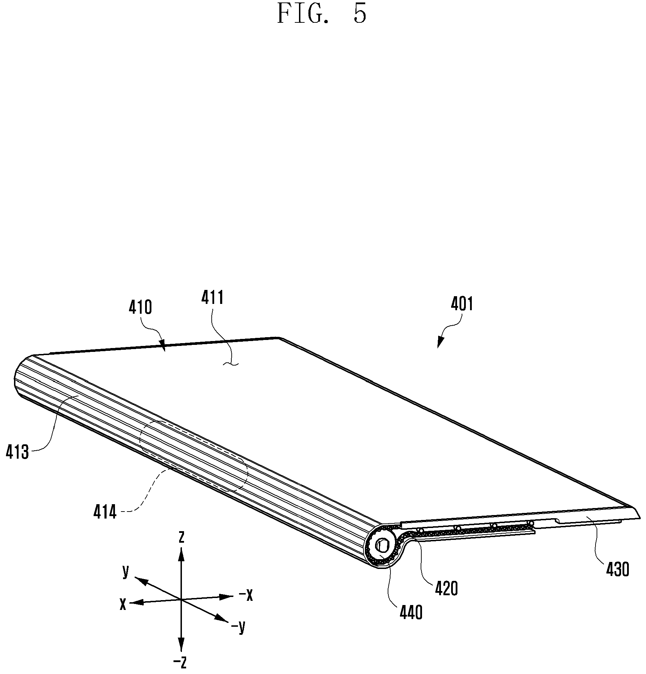

FIG. 4A is an exploded perspective view of a housing, components, and a back cover of a rollable electronic device according to various embodiments of the disclosure. FIG. 4B is an exploded perspective view of a sliding assembly and the housing of the rollable electronic device according to various embodiments of the disclosure. FIG. 4C is a view illustrating the housing, the back cover, and a slit plate of the rollable electronic device according to various embodiments of the disclosure. FIG. 4D is a view illustrating the components and a display of the rollable electronic device according to various embodiments of the disclosure. FIG. 5 is a view illustrating the display module of the rollable electronic device according to various embodiments of the disclosure.

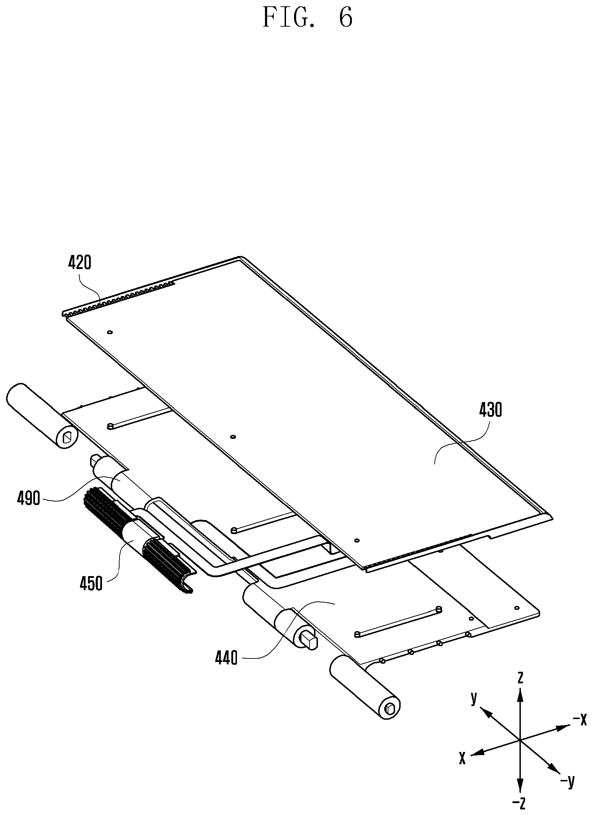

Referring to FIGS. 4A to 5, a rollable electronic device 400 (e.g., the rollable electronic device 200 of FIG. 2 or the rollable electronic device 300 of FIG. 3) according to various embodiments of the disclosure may include a display module 401, a housing 460 (e.g., a housing structure or a housing), components 470, a back cover 480, and a bracket shaft (e.g., the bracket shaft 490 of FIG. 6).

As an embodiment, the display module 401 may be located in the inner space defined by the housing 460. The display module 401 may include a display 410, a support member 420, a slide plate 430, and a shaft bracket 440. The display 410 may be visually exposed to the outside in a first direction (e.g., the z-axis direction).

As an embodiment, the display 410 may be made of a flexible material. The display 410 may be bent and rolled in the lower direction of the slide plate 430 in a bending area 413. The display 410 may be rollable and may display an image according to an input image signal. The front surface of the display 410 may be visually exposed to the outside. The display 410 may include a fixed area 411 exposed to the outside in a screen contraction (e.g., rollable-in or slide-in) state and an expanded area 412 exposed to the outside in a screen expansion (e.g., rollable-out or slide-out).

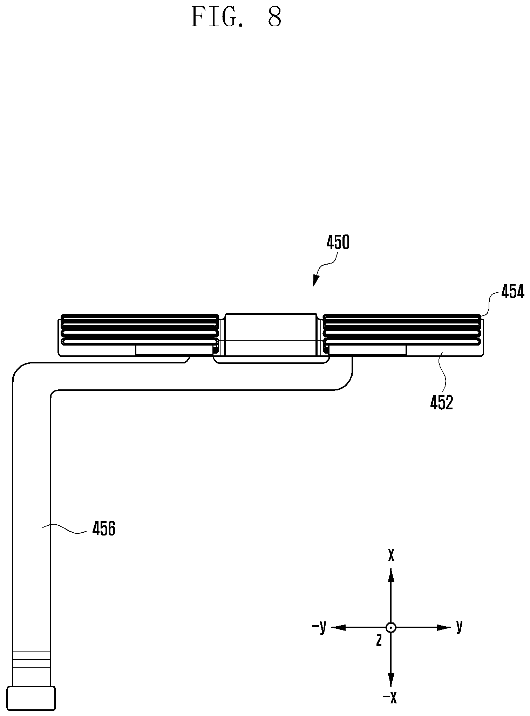

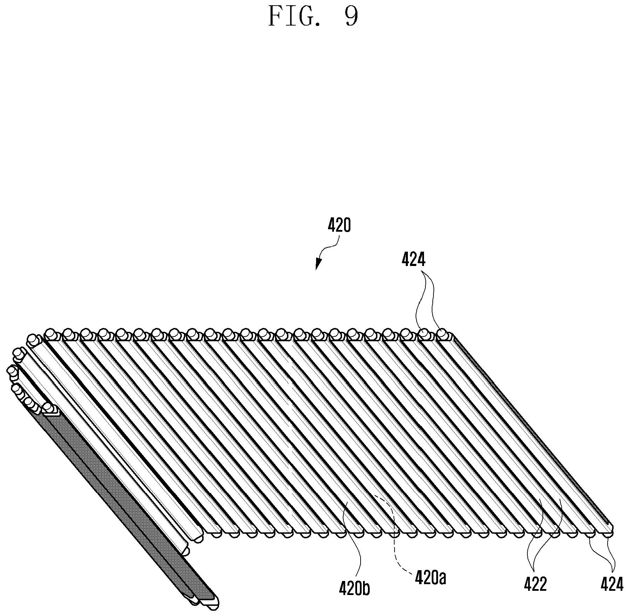

As an embodiment, when the multiple bars (e.g., the multiple bars 422 of FIG. 9) of the support member 420 may move to a first direction or a second direction opposite to the first direction by the driving of the coil assembly (e.g., the coil assembly 450 of FIGS. 6 and 8) and the display 410 is disposed to the outside, the size of the display area may vary.

As an embodiment, the housing 460 is disposed under the shaft bracket 440, and the shaft bracket 440 and the housing 460 may be fastened by fastening members 405 (e.g., screws). A plurality of first fastening holes 440a may be provided in the shaft bracket 440, a plurality of second fastening holes 460a may be provided in the housing 460, and the first fastening holes 440a and the housing 460 be arranged to be aligned with each other. The fastening members 405 may be inserted into the first fastening holes 440a and the housing 460 so that the first fastening holes 440a and the housing 460 may be fastened to each other.

As an embodiment, the components 470 may be disposed in the lower portion of the housing 460. The components 470 may include a printed circuit board 472 on which a plurality of electronic components are mounted and a battery 474 (e.g., the battery 189 of FIG. 1). A plurality of electronic components may include at least one of the processor 120, the memory 130, the sound output module 155, the audio module 170, the sensor module 176, the haptic module 179, the camera module 180, the power management module 188, and the communication module 190 illustrated in FIG. 1.

As an embodiment, a back cover 480 may be disposed under the components 470, and the back cover 480 may be coupled to the housing 460 to provide the rear surface of the rollable electronic device 400 (e.g., the rear surface 302 of FIG. 3).

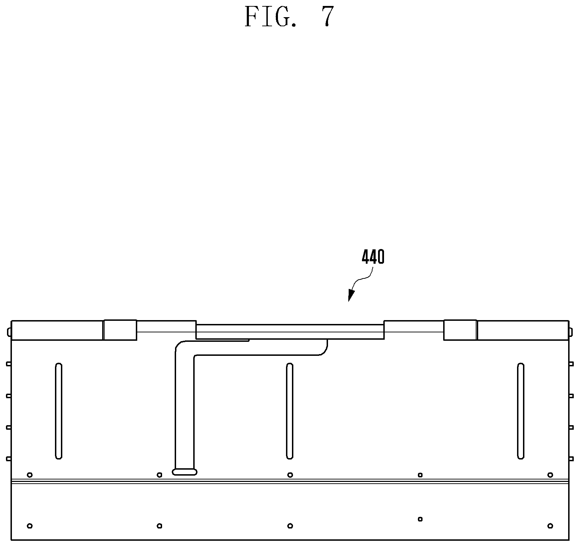

FIG. 6 is a perspective view illustrating a slide plate, a shaft bracket, and a coil assembly of a rollable electronic device according to various embodiments of the disclosure. FIG. 7 is a view illustrating a shaft bracket of the rollable electronic device according to various embodiments of the disclosure. FIG. 8 is a view illustrating a coil assembly of the rollable electronic device according to various embodiments of the disclosure.

Referring to FIGS. 6 to 8, a slide plate 430 may be disposed to support a display (e.g., the display 410 of FIG. 5). A shaft bracket 440 may be disposed under the slide plate 430. The bracket shaft 490 may be coupled to the first side (e.g., the x-axis direction) of the shaft bracket 440. A coil assembly 450 may be disposed to cover at least a portion of the shaft bracket 440.

As an embodiment, the coil assembly 450 may include a coil bracket 452, coils 454 (e.g., electromagnet coils), and a flexible circuit board 456 (e.g., a coil FPCB). The coil bracket 452 may have a semi-cylindrical (or cylindrical) shape to be coupled to the bracket shaft 490. The coils 454 may be disposed on the coil bracket 452. The flexible circuit board 456 may be electrically connected to the coil 454 so that a current may be supplied to the coil 454.

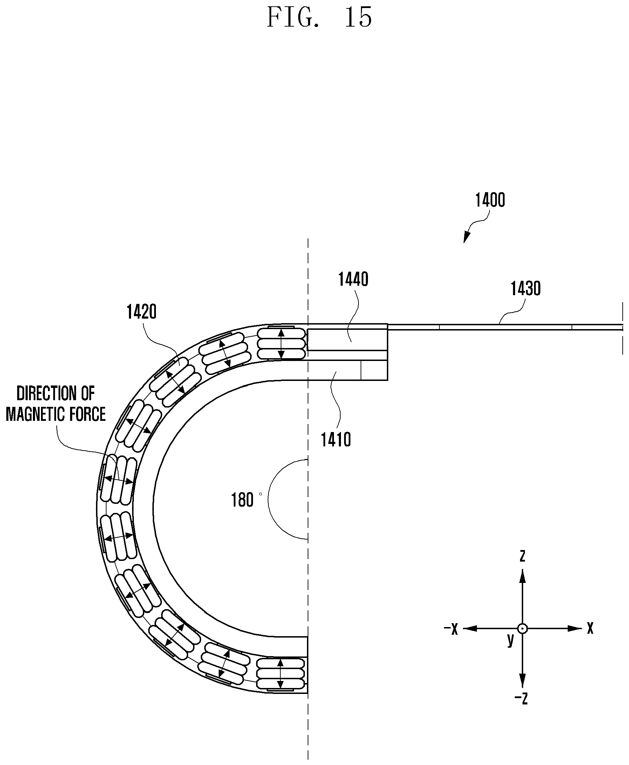

As an embodiment, the coil assembly 450 may be disposed to correspond to the central portion 414 (e.g., the center with reference to the y-axis of FIG. 5) of the display (e.g., the display 410 of FIG. 5). The coils 454 may be disposed to correspond to 180 degrees in the bending area 413. As an example, the coils 454 may be disposed to correspond to a surface corresponding to a portion (e.g., 180 degrees) of the entire surface of the coil bracket 452 along a reference line 1501 (e.g., the z-axis line) shown in FIG. 15.

As an example, the flexible circuit board 456 of the coil assembly 450 may be disposed on a plate of the shaft bracket 440. The shaft bracket 440 may support the support member 420 in the bending area 413. When the display 410 is expanded, the support member 420 may be supported in a flat area other than the bending area 413.

FIG. 9 is a view illustrating a support member of a rollable electronic device according to various embodiments of the disclosure.

Referring to FIG. 9, the support member 420 may include multiple bars 422 rotatably connected to each other. According to an embodiment, the support member 420 may include a top surface 420a (e.g., the front surface) configured with the multiple bars 422 and a rear surface 420b (e.g., the back surface) facing a direction opposite to the top surface 420a (e.g., the front surface). According to an embodiment, the top surface 420a may face the display 410 and the rear surface 420b may face the shaft bracket 440.

According to an embodiment, the multiple bars 422 may be made of a metal material and/or polymer. Each of the multiple bars 422 may include guide protrusions 424 protruding from opposite ends to be guided along side rails of the slide plate 430 in the inner space of the electronic device 300.

According to an embodiment, each of the multiple bars 422 may include at least one of a POM layer, an acetal layer, or a Teflon layer in order to reduce friction. Therefore, when the support member 420 is supported via the slide plate 430, frictional resistance according to a sliding motion may be reduced.

As an embodiment, in the slide-in state (e.g., the screen contraction state) (e.g., the rollable-in state) of an electronic device (e.g., the electronic device 300 of FIG. 3 or the electronic device 400 of FIGS. 4A and 4B), the support member 420 may be accommodated into the inner space. According to an embodiment, at least a portion of the display 410 may be disposed to be visually invisible from the outside by being accommodated into the inner space in the slide-in state (e.g., the screen contraction state) (e.g., the rollable-in state).

According to an embodiment, in the state in which the display 410 is slid out along the first direction, a visually exposed area (e.g., a screen) may be expanded while being supported by the support member 420.

According to an embodiment, the screen expansion (e.g., slide-out) operation and/or screen contraction (e.g., slide-in) operation of the electronic device (e.g., the electronic device 300 of FIG. 3 and the electronic device 400 of FIGS. 4A and 4B) may be performed automatically (including semi-automatically) by using the support member 420 and the coil assembly 450.

According to an embodiment, the screen expansion (e.g., slide-out) operation and/or screen contraction (e.g., slide-In) operation of the electronic device (e.g., the electronic device 300 of FIG. 3 or the electronic device 400 of FIGS. 4A and 4B) may be manually performed through a user's manipulation.

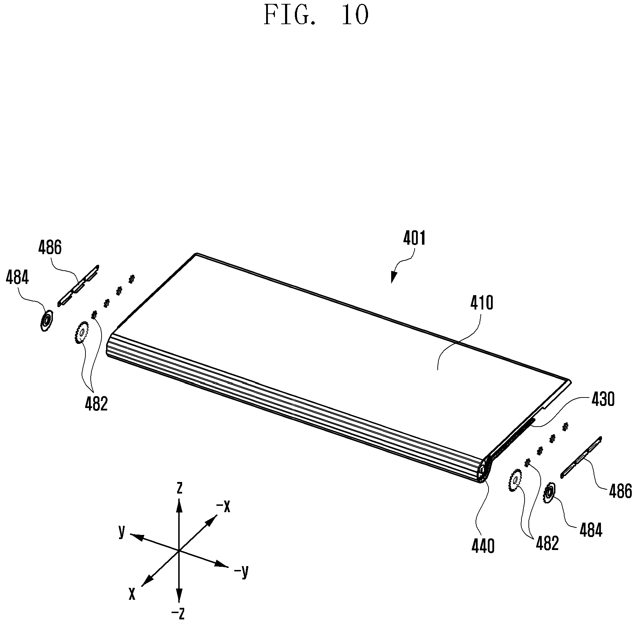

FIG. 10 is a view illustrating assembly of a driving gear and a gear cover of a rollable electronic device according to various embodiments of the disclosure.

Referring to FIG. 10, a display module (e.g., the display module 401 of FIG. 4A) may include a display 410, a slide plate 430, a shaft bracket 440, and driving gears 482. The driving gears 482 may be fastened to opposite side surfaces of the shaft bracket 440. Each of the driving gears 482 may include of a rotation gear and auxiliary gears. Gear covers may be disposed to cover the driving gears 482, respectively. Each of the gear covers may include a first cover 484 (e.g., a circular cover) for fixing (e.g., stopping) circular driving and a second cover 486 (e.g., a rectangular cover) for fixing (e.g., stopping) a linear motion.

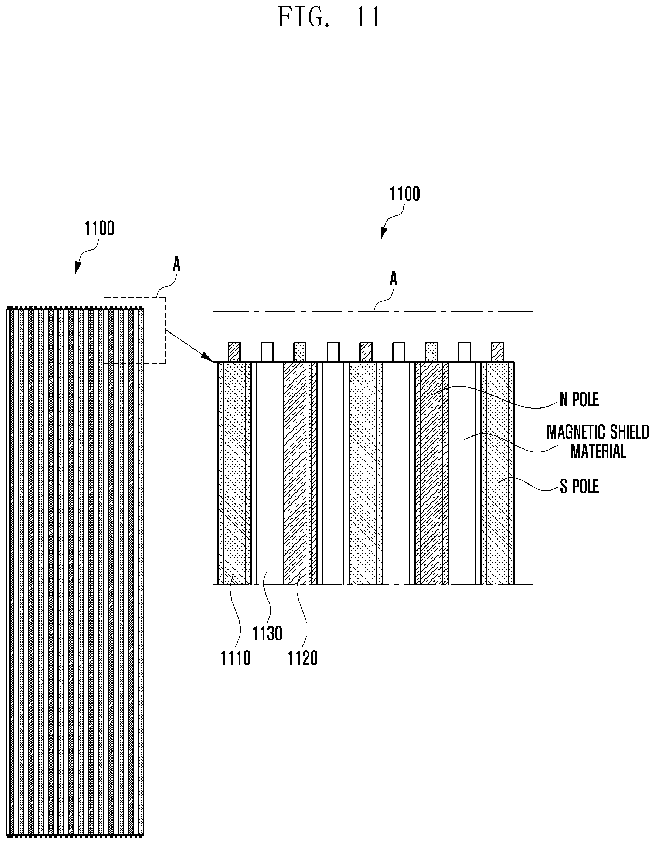

FIG. 11 is a view illustrating a support member of a rollable electronic device according to various embodiments of the disclosure.

Referring to FIG. 11, the support member 1100 may include multiple bars 1110, 1120, and 1130. The multiple bars 1110, 1120, and 1130 include a first multiple bars 1110 including an S-pole magnetic material (e.g., S-pole magnetic material bars), a second multiple bars 1120 including an N-pole magnetic material (e.g., N-pole magnetic bars), and third multiple bars 1130 (e.g., magnetic shield material bars). As an example, the third multiple bars 1130 (e.g., magnetic shield material bars) may include a cold-rolled steel plate (steel plate cold commercial (SPCC)). In order to prevent the first multiple bars 1110 (e.g., S-pole magnetic bars) and the second multiple bars 1120 (e.g., N-pole magnetic bars) having different polarities from attracting each other, the third multiple bars 1130 (e.g., a magnetic shield material) may be disposed between the second multiple bars 1120 (N-pole magnetic bars). The first multiple bars 1110 (e.g., S-pole magnetic bars based on the polarity close to the display) and the second multiple bars 1120 (e.g., N-pole magnetic material bars based on the polarity close to the display) may be alternately disposed.

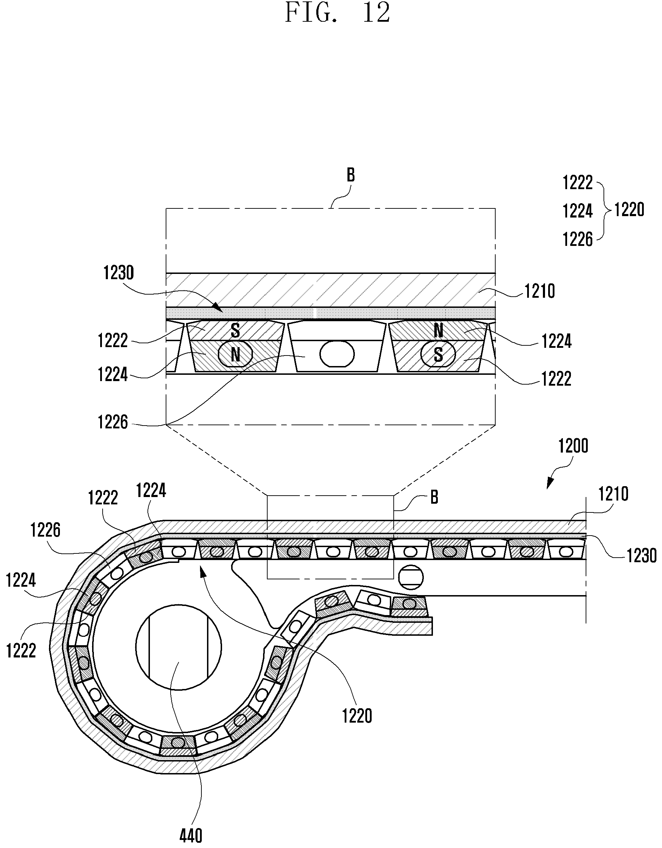

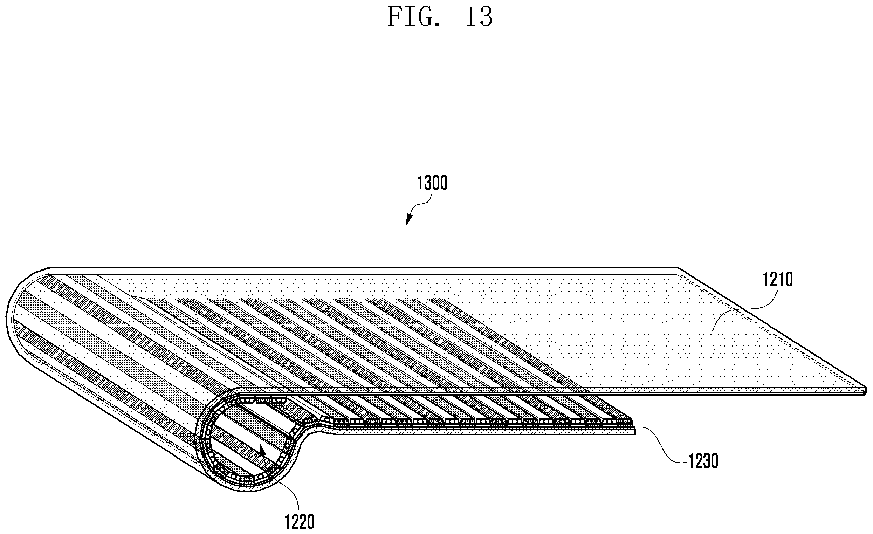

FIG. 12 is a view illustrating cross sectionals of a display and a support member of a rollable electronic device according to various embodiments of the disclosure. FIG. 13 is a view illustrating that the display is supported by the support member.

Referring to FIGS. 12 and 13, multiple bars 1220 may be disposed on the rear surface (e.g., the bottom surface) of the display 1210. An adhesive layer 1230 is disposed on the top surfaces of the plurality of multiple bars 1220 to interconnect the multiple bars 1220. In addition, an adhesive layer 1230 may be interposed between the rear surface (e.g., the bottom surface) of the display 1210 and the plurality of multiple bars 1220 so that the multiple bars 1220 may be bonded to the rear surface (e.g., the bottom surface) of the display 1210. Since the multiple bars 1220 are attached to the rear surface (e.g., the bottom surface) of the display 1210, the display 1210 may be moved following the movement of the multiple bars 1220.

According to an embodiment, the multiple bars 1220 may include: first multiple bars 1222 (e.g., S-pole magnetic bars based on the polarity close to the display 1210); second multiple bars 1224 (e.g., N-pole magnetic bars based on the polarity close to the display 1210); and third multiple bars 1226 (e.g., magnetic shield material bars). The third multiple bars 1226 (e.g., magnetic shield material bars) may be disposed between the first multiple bars 1222 (e.g., S-pole magnetic bars based on the polarity close to the display 1210) and the second multiple bars 1224 (e.g., N-pole magnetic bars based on the polarity close to the display 1210). The heights of the first multiple bars 1222 (e.g., S-pole magnetic bars based on the polarity close to the display 1210), the second multiple bars 1224 (e.g., N-pole magnetic bars based on the polarity close to the display 1210), and the third multiple bars 1226 (e.g., magnetic shield material bars) may be substantially equal to each other.

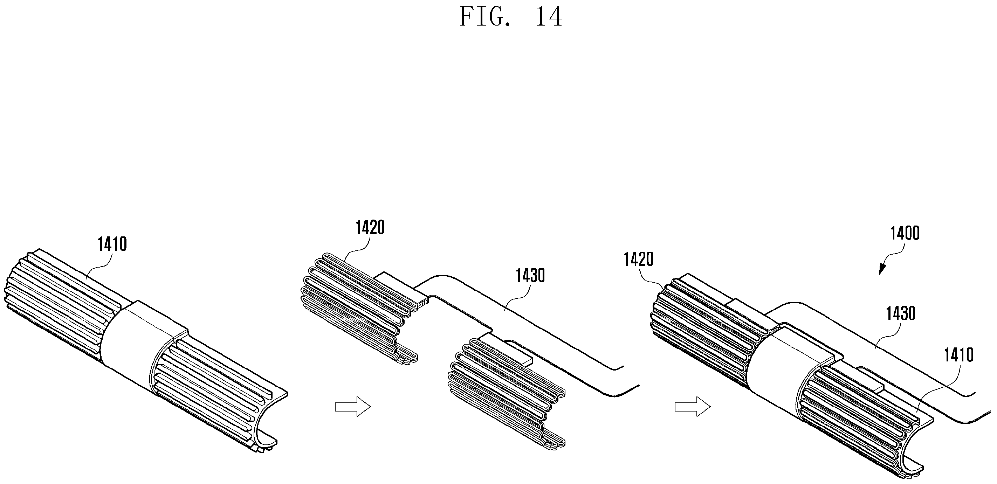

FIG. 14 is a perspective view of a coil assembly of a rollable electronic device according to various embodiments of the disclosure. FIG. 15 is a cross-sectional view of the coil assembly of the rollable electronic device according to various embodiments of the disclosure.

Referring to FIGS. 14 and 15, a coil assembly 1400 may include a coil bracket 1410, coils 1420 (e.g., electromagnet coils), and a flexible circuit board 1430 (e.g., a coil FPCB). The coils 1420 (e.g., electromagnet coils) and the flexible circuit board 1430 (e.g., a coil FPCB) may be electrically connected via a coil junction 1440.

As an embodiment, the coil bracket 1410 may have a semi-cylindrical (or cylindrical) shape. The coils 1420 may be disposed on the coil bracket 1410. As an embodiment, the coils 1420 (e.g., the coils 454 of FIG. 8) may be arranged to correspond a surface corresponding to a portion (e.g., 180 degrees) of the entire surface of the coil bracket 1410 (e.g., the coil bracket 452 of FIG. 8) along a reference line 1501 (e.g., the z-axis line). As an example, when a current is supplied to the coils 1420, a magnetic force may be generated in a direction perpendicular to a tangential direction of the coils 1420 in an area of 180 degrees. The coils 1420 may function as electromagnets of which the polarities change depending on the direction of the current flowing through the coils 1420.

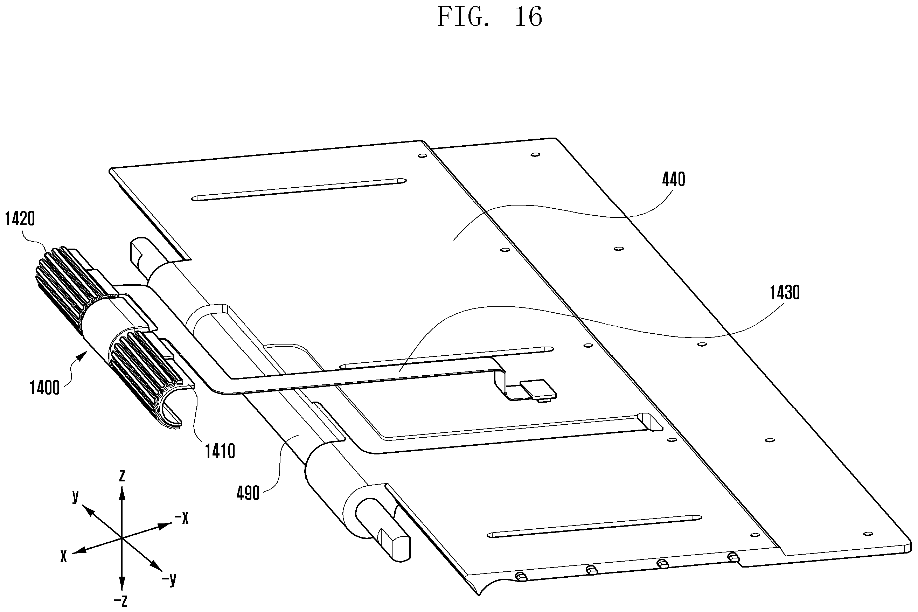

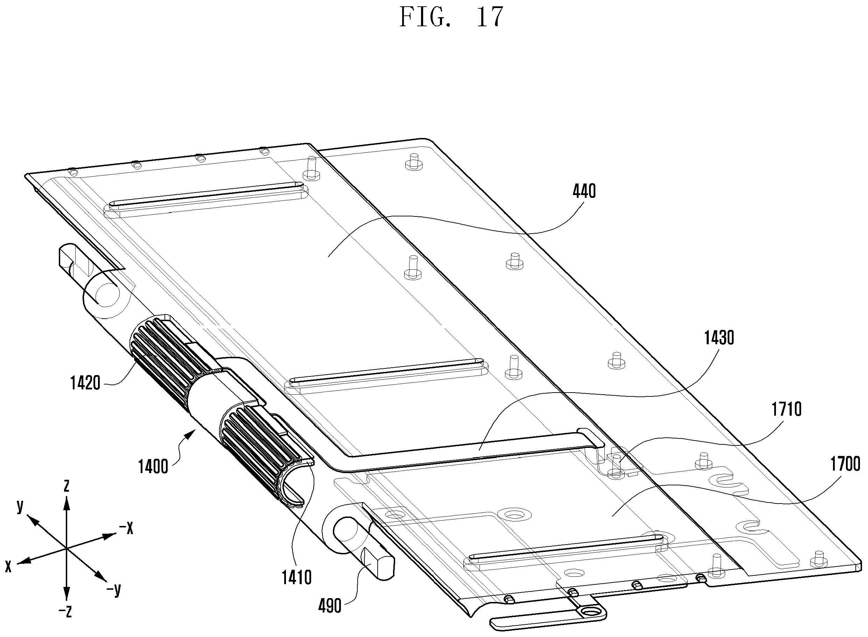

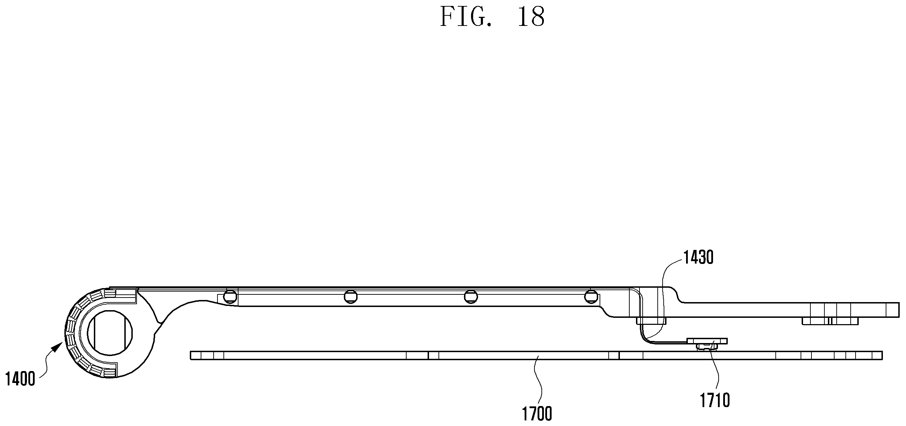

FIG. 16 is a view illustrating the coil assembly coupled to the shaft bracket. FIG. 17 is a perspective view illustrating a connection structure between the coil assembly and the printed circuit board. FIG. 18 is a cross-sectional view illustrating the connection structure between the coil assembly and the printed circuit board.

Referring to FIGS. 16 to 18, the coil assembly 1400 of the electronic device may be coupled to the shaft bracket 440. The flexible circuit board 1430 (e.g., a coil FPCB) may be disposed on the plate of the shaft bracket 440. A printed circuit board 1700 (e.g., a PBA) may be disposed on one side of the plate of the shaft bracket 440. The flexible circuit board 1430 may be electrically connected to a connector 1710 of the printed circuit board 1700 (e.g., a PBA). A driving current from the printed circuit board 1700 (e.g., a PBA) may be supplied to each of the coils 1420 of the coil assembly 1400 via the flexible circuit board 1430.

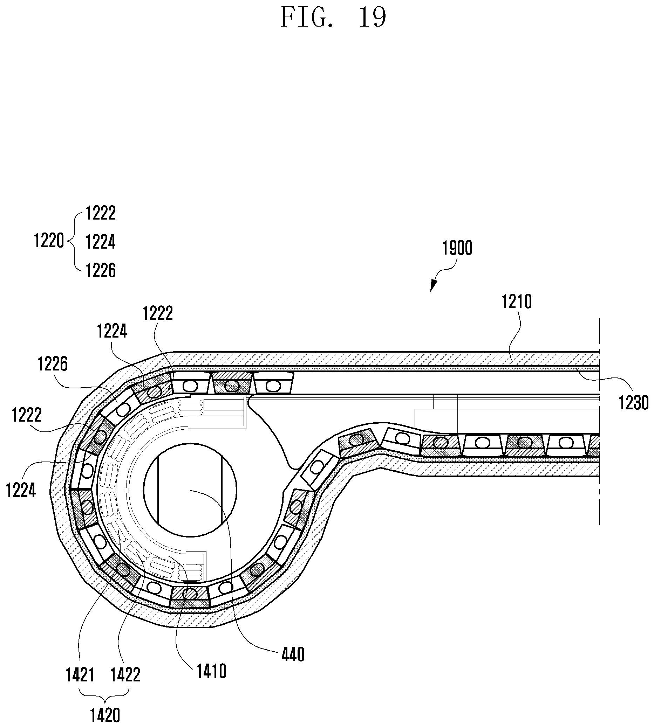

FIG. 19 is a view illustrating a cross section of an electronic device 1900 in which a display, a support member, and a coil assembly are coupled.

Referring to FIG. 19 together with FIGS. 16 to 18, the coils 1420 may function as electromagnets of which the polarities change depending on the direction of the current flowing through the coils 1420.

As an embodiment, during a first period, a current flowing in a first direction may be supplied to first coils 1421 among the coils 1420. In addition, a current flowing in a second direction opposite to the first direction may be supplied to second coils 1422 of the coils 1420.

As an embodiment, during a second period, the current flowing in the second direction may be supplied to the first coils 1421 among the coils 1420. In addition, the current flowing in the first direction opposite to the second direction may be supplied to the second coils 1422 among the coils 1420.

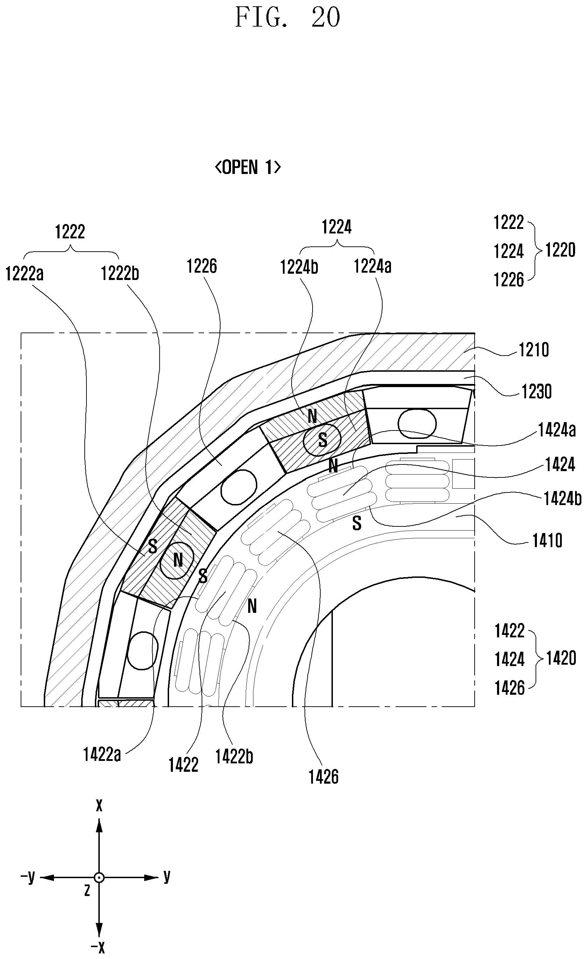

FIGS. 20 to 22 are views illustrating a method of expanding (e.g., slide-out) (e.g., screen expansion) (e.g., slide-open) a display of a rollable electronic device according to various embodiments of the disclosure.

Referring to FIG. 20, the multiple bars 1220 may include: first multiple bars 1222 (e.g., S-pole magnetic bars based on the polarity close to the display 1210); second multiple bars 1224 (e.g., N-pole magnetic bars based on the polarity close to the display 1210); and third multiple bars 1226 (e.g., magnetic shield material bars). The coils 1420 may include first coils 1422, second coils 1424, and third coils 1426. For example, current may be supplied to the coils 1420 so that a repulsive or attractive force acts with the multi-bars 1220.

As an embodiment, each of the first multiple bars 1222 may include an S-pole polarity portion 1222a and an N-pole polarity portion 1222b. The S-pole polarity portions 1222a of the first multiple bars 1222 may be positioned close to the display 1210. Each of the second multiple bars 1224 may include an S-pole polarity portion 1224a and an N-pole polarity portion 1224b. The N-pole polarity portions 1224b of the second multiple bars 1224 may be positioned close to the display 1210. Positions of the S poles and the N poles of the first multiple bars 1222 may change depending on the period. Positions of the S poles and the N poles of the second multiple bars 1224 may change depending on the period. For example, the positions of the S-pole and N- pole of the first multi-bar 1222 may be fixed. The positions of the S-pole and N-pole of the second multi-bar 1224 may be fixed.

As an embodiment, the polarities of the first coils 1422, the second coils 1424, and the third coils 1426 (e.g., S-pole and N-pole) may change depending on the period. For example, the polarity (e.g., S-pole and N-pole) of first coil 1422, second coil 1424, and third coil 1426 may change depending on the direction of the supplied current.

As an embodiment, an adhesive layer 1230 may be interposed between the rear surface (e.g., the bottom surface) of the display 1210 and the plurality of multiple bars 1220 so that the multiple bars 1220 may be bonded to the rear surface (e.g., the bottom surface) of the display 1210. Since the multiple bars 1220 are attached to the rear surface (e.g., the bottom surface) of the display 1210, the display 1210 may be moved by the movement of the multiple bars 1220.

As an embodiment, the plurality of multiple bars 1220 may be moved to the first direction (e.g., the y-axis direction) or the second direction (e.g., the -y-axis direction) or may be fixed to the current position depending on the change of the polarities of the first coils 1422, the second coils 1424, and the third coils 1426.

According to an embodiment, before the expansion (e.g., slide-out) (e.g., screen expansion) (e.g., slide-open) of the display 1210 starts (stop state in which there is no expansion or contraction of the display), a current may be applied to the coils 1420.

As an embodiment, the first multiple bars 1222 and the first coils 1422 may be disposed to overlap each other. The N-pole polarity portion 1222b of the first multi-bar 1222 may be positioned in proximity to the first coil 1422.

The second multiple bars 1224 and the second coils 1424 may be disposed to overlap each other. The S-pole polarity portion 1224a of the second multi-bar 1224 may be positioned in proximity to the second coil 1424.

The third multiple bars 1226 (e.g., magnetic shield material bars) and the third coils 1426 may be disposed to overlap each other.

As an embodiment, a first current flowing in the first direction may be supplied to the first coils 1422 overlapping the first multiple bars 1222 The first sides 1422b of the first coils 1422 may function as N-pole electromagnets, and the second sides 1422a of the first coils 1422 may function as S-pole electromagnets The N-pole polarity portion 1222b of the first multi bar 122 and the second side 1422a (e.g., S-pole) of the first coil 1422 may be disposed in close proximity. A force (e.g., attraction) may occur for the N-pole polarized portion 1222b of the first multiple bars 1222 and the second sides 1422a (e.g., S-pole) of the first coils 1422 to attract each other may be generated.

A second current flowing in the second direction may be supplied to the second coils 1424 overlapping the second multiple bars 1224 The first sides 1424b of the second coils 1424 may function as S-pole electromagnets, and the second sides 1424a of the second coils 1424 may function as N-pole electromagnets. The S-pole polarity portion 1224a of the second multi bar 1224 and the second side 1424a (e.g., the N-pole) of the second coil 1424 may be disposed in close proximity. The force (e.g., attraction) may occur for the S-pole polarized portion 1224a of the second multiple bars 1224 and the second sides (e.g., N-pole) of the second coils 1424 to attract each other may be generated.

As an embodiment, no current may be supplied to the third coils 1426 overlapping the third multiple bars 1226 (e.g., magnetic shield material bars). For example, the third coil 1426 may not have the polarity (e.g., S-pole or N-pole).

In this way, a force to cause the first multiple bars 1222 and first coils 1422 to attract each other may be generated. The force to cause the second multiple bars 1224 and the second coils 1424 to attract each other may be generated. Accordingly, the multiple bars 1220 may be fixed without moving by the first coils 1422 and the second coils 1424. Since the multi bars 1220 are fixed, the display 1210 may be fixed without moving.

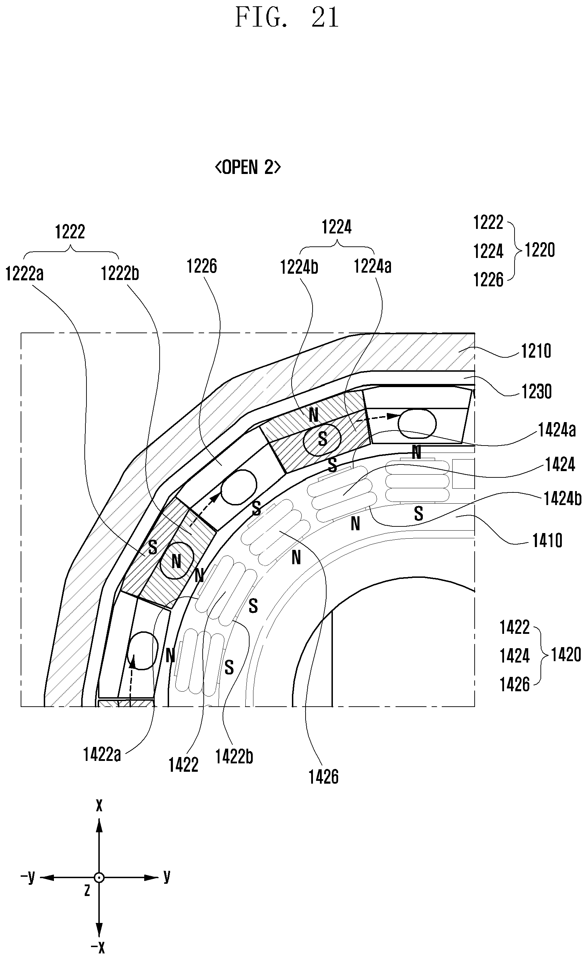

Referring to FIG. 21, a current may be supplied to the coils 1420 such that repulsive or attractive forces act on the multiple bars 1220 and the coils 1420.

As an embodiment, the second current flowing in the second direction may be supplied to the first coils 1422 overlapping the first multiple bars 1222. The first sides 1422b of the first coils 1422 may function as S-pole electromagnets. The second sides 1422a of the first coils 1422 may function as N-pole electromagnets. A repulsive force may occur between the N-pole polarity portion 1222b of the first multiple bars 1222 and the second sides (1422a) of the first coils 1422.

The first current flowing in the first direction may be supplied to the second coils 1424 overlapping the second multiple bars 1224. The first sides 1424b of the second coils 1424 may function as N-pole electromagnets, and the second sides 1424a of the second coils 1424 may function as S-pole electromagnets. The repulsive force may occur between the S-pole polarity portion 1224a of the second multiple bars 1224 and the second sides (1424a) of the second coils 1424.

The second current flowing in the second direction may be supplied to the third coils 1426 overlapping the third multiple bars 1226 (e.g., magnetic shield material bars). The first sides (e.g., lower sides) of the third coils 1426 may function as N-pole electromagnets, and the second sides (e.g., upper sides) of the third coils 1426 may function as S-pole electromagnets.

Here, since the second sides 1422a of the first coils 1422 function as the N-pole electromagnets, a repulsive force may be generated between the first coils 1422 and the first multiple bars 1222. Also, since the second side 1424a of the second coil 1424 functions as the S-pole electromagnet, a repulsive force may be generated between the second coil 1424 and the second multi-bar 1224. As such, the first multi-bar 1222 and the second multi-bar 1224 may be moved in the first direction (e.g., the y-axis direction).

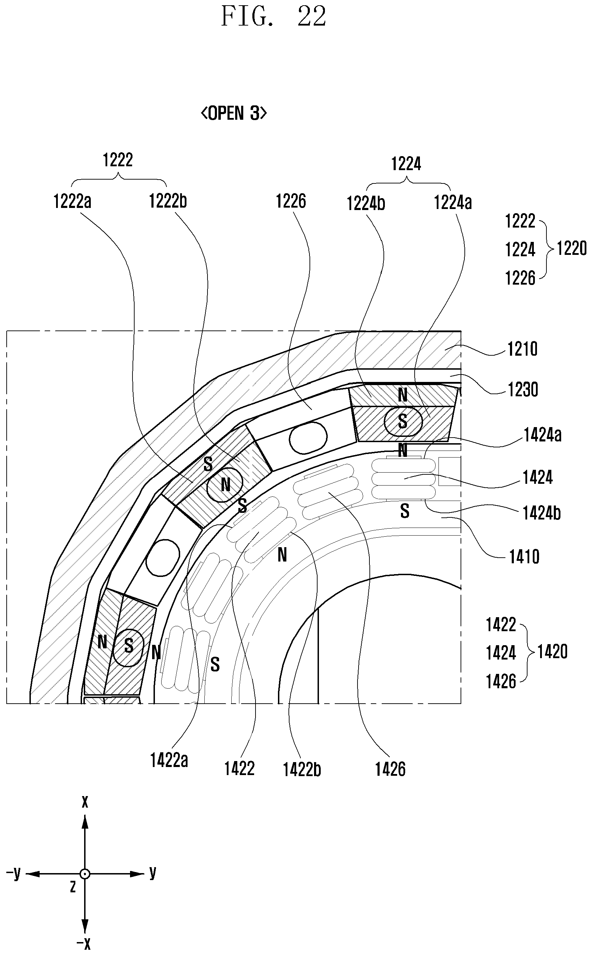

The multi-bars 1420 stopped in the operation of FIG. 20 may move in the first direction (e.g., the y-axis direction) by the operation of FIG. 21. FIG. 22 illustrates the state after the multiple bars 1420 have moved once (e.g., 1 space) in the first direction (e.g., the y-axis direction) from the state of FIG. 21.

Referring to FIG. 22, current may be supplied to the first coils 1422 overlapping the first multi bar 1222 so that the attractive force is generated with the multi-bar 1220. Current may be supplied to the second coil 1424 overlapping the second multi bar 1224 so that the attractive force is generated with the multi-bar 1220.

As an embodiment, a first current flowing in a first direction may be supplied to the first coil 1422 overlapping the first multi bar 1222. The first side 1422b of the first coil 1422 may function as an N-pole electromagnet. The second side 1422a of the first coil 1422 may function as an S-pole electromagnet. The N-pole polarity portion 1222b of the first multi bar 122 and the second side 1422a (e.g., S-pole) of the first coil 1422 may be disposed close to each other. The attractive force may occur between the N-pole polarity portion 1222b of the first multi bar 1222 and the second side 1422a (e.g., S-pole) of the first coil 1422.

As an embodiment, a second current flowing in a second direction (e.g., a current flowing in an opposite direction to the first current) may be supplied to the second coil 1424 overlapping the second multi bar 1224. The first side 1424b of the second coil 1424 may function as the S-pole electromagnet. The second side 1424a of the second coil 1424 may function as the N-pole electromagnet. The S-pole polarity portion 1224a of the second multi bar 1224 and the second side 1424a (e.g., N-pole) of the second coil 1424 may be disposed close to each other. The attractive force may occur between the S-pole polarity portion 1224a of the second multi bar 1224 and the second side 1424a (e.g., N-pole) of the second coil 1424.

No current is supplied to the coils 1420 overlapping the third multiple bars 1226 (e.g., magnetic shield material bars).

In this way, the mutually attractive force may be generated between the first multi bar 1222 and the first coil 1422. The mutually attractive force may be generated between the second multi bar 1224 and the second coil 1424. Accordingly, the multi bars 1220 may be fixed without moving by the first coils 1422 and the second coils 1424. Since the multi bars 1220 are fixed, the display 1210 can be fixed without moving.

After the multiple bars 1420 move once (e.g., 1 space) in the first direction (e.g., the y-axis direction), a current flowing in a direction opposite to that illustrated in FIG. 21, the multi-bar 1220 can be fixed by the operation of FIG. 22. After the operation of FIG. 22, by supplying current in the opposite direction to that shown in FIG. 21 to the first coils 1422, the second coils 1424, and the third coils 1426. As such, the multiple bars 1420 may be sequentially to move in the first direction (e.g., the y-axis direction).

In an electronic device according to various embodiments of the disclosure, a coil actuator is disposed to correspond to the central portion of a display so that a driving force is transmitted to a wide area of the display. As a result, it is possible to prevent the display from being deformed due to concentration of the driving force for screen expansion or screen contraction of the display.

An electronic device according to various embodiments of the disclosure generates a driving for screen expansion or screen contraction of a display by using electromagnet coils and the multiple bars. As a result, it is possible to increase a driving output by increasing the areas of the electromagnets coils and the multiple bars without including a motor.

An electronic device according to various embodiments of the disclosure (e.g., the electronic device 101 of FIG. 1, the electronic device 200 of FIG. 2, the electronic device 300 of FIG. 3, the electronic device 400 of FIG. 4A, or the electronic device 1900 of FIG. 19) may include: a flexible display (e.g., the flexible display 210 of FIG. 2, the display 310 of FIG. 3, the display 410 of FIG. 4D, or the display 1210 of FIGS. 12 and 13); a support member (the support member 420 of FIGS. 5 and 6); a shaft bracket (e.g., the shaft bracket 440 of FIG. 4B, the shaft bracket 440 of FIGS. 5 to 7, the shaft bracket 440 of FIG. 10, the shaft bracket 440 of FIG. 12, or the shaft bracket 440 of FIGS. 16 and 17); a coil assembly (e.g., the coil assembly 450 of FIGS. 6 and 8, the coil assembly 1400 of FIGS. 14 and 15, or the coil assembly 1400 of FIGS. 16 to 18); and a printed circuit board (e.g., the printed circuit board 472 of FIGS. 4A and 4D or the printed circuit board 1700 of FIGS. 17 and 18). The flexible display 210, 310, 410, or 1210 may include: a first area disposed to be visible from the outside; and a second area extending from the first area, accommodated inside in a slide-in state, and disposed to be visible from the outside in a slide-out state. The support member 420 may be disposed on the rear surface of the flexible display 210, 310, 410, or 1210 to support the flexible display 210, 310, 410, or 1210 in the slide-in state and the slide-out state. The shaft bracket 440 may be disposed below the support member 420. The coil assembly 450 or 1400 may be coupled to one side of the shaft bracket 440 and may generate a driving force for moving the support member 420 in a first direction or in a second direction opposite to the first direction. An electronic component configured to supply a driving current to the coil assembly 450 or 1400 may be disposed on the printed circuit board 472 or 1700.

According to an embodiment, the support member 420 may include: first multiple bars (e.g., the first multiple bars 1110 of FIG. 11 or the first multiple bars 1222 of FIG. 12); second multiple bars 1110 (the second multiple bars 1120 of FIG. 11 or the second multiple bars 1224 of FIG. 12); third multiple bars (e.g., the third bars 1130 of FIG. 11 or the third multiple bars 1226 of FIG. 12) disposed between the first multiple-bars 1110 or 1222 and the second multiple bars 1120 or 1224 to shield the first multiple bars 1110 or 1222 and the second multiple bars 1120 or 1224.

According to an embodiment, the first multiple bars 1110 or 1222 may include: first polarity portions having a first polarity at a side closer to the flexible display; and second polarity portions having a second polarity opposite to the first polarity at a side farther from the flexible display.

According to an embodiment, the second multiple bars 1120 or 1224 may include: first polarity portions having a first polarity at a side farther from the flexible display; and second polarity portions having a second polarity opposite to the first polarity at a side closer to the flexible display.

According to an embodiment, the third multiple bars 1130 or 1226 may include a magnetic shield material.

According to an embodiment, the magnetic shield material may include a cold-rolled steel plate (steel plate cold commercial (SPCC)).

According to an embodiment, the coil assembly 450 or 1400 may be disposed to overlap the first multiple bars 1110 or 1222, the second multiple bars 1120 or 1224, and the third multiple bars 1130 or 1226.

According to an embodiment, the coil assembly 450 or 1400 may include multiple of coils (e.g., the coils 454 of FIG. 8 or the coils 1420 of FIG. 12) configured to generate a repulsive force or an attractive force with the first multiple bars 1110 or 1222 and a repulsive force or an attractive force with the second multiple bars 1120 or 1224 depending on the direction of a current input thereto.

According to an embodiment, the coil assembly 450 or 1400 may include: a coil bracket (the coil bracket 452 of FIG. 8 and the coil bracket 1410 of FIG. 14 ) on which the multiple coils 454 and 1420 are disposed; and a flexible circuit board (e.g., the flexible circuit board 456 of FIG. 8 or the flexible circuit board 1430 of FIG. 16) electrically connected to the printed circuit board 472 or 1700 to supply a current to the coils 454 or 1420.

According to an embodiment, the coil bracket 452 or 1410 may be configured in a semi-cylindrical shape, and the multiple coils 454 or 1420 may be disposed to correspond to a partial surface of the coil bracket 452 or 1410.

According to an embodiment, the multiple coils 454 or 1420 may include: first coil (e.g., the first coils 1422 of FIG. 19 ) positioned to correspond to the first multiple bars 1110 or 1222; second coils (e.g., the second coils 1424 of FIG. 19) positioned to correspond to the second multiple bars 1120 or 1224; and third coils (e.g., the third coils 1426 of FIG. 19) positioned to correspond to the third multiple bars 1130 or 1226).

According to an embodiment, during a first period, a first current flowing in a first direction may be supplied to the first coils 1422 and a current flowing in a second direction opposite to the first direction may be supplied to the second coils 1424. During a second period, a second current flowing in a second direction may be supplied to the first coils 1422 and a current flowing in a first direction opposite to the second direction may be supplied to the second coils 1424.

According to an embodiment, by a current supplied to the first coils 1422, the second coils 1424, or the third coils 1426, the multiple bars may be moved in a first direction or in a second direction opposite to the first direction, or may be fixed to the current positions thereof.

According to an embodiment, prior to screen expansion or screen contraction of the flexible display 210, 310, 410, or 1210, a first current may be supplied to the first coils 1422 overlapping the first multiple bars 1110 or 1222 among the multiple coils 454 or 1420 to generate an attractive force between the first coils 1422 and the first multiple bars 1110 or 1222.

According to an embodiment, prior to screen expansion or screen contraction of the flexible display 210, 310, 410, or 1210, a second current opposite to the first current may be supplied to the second coils 1424 overlapping the second multiple bars 1120 or 1224 among the multiple coils 454 or 1420 to generate an attractive force between the second coils 1424 and the first multiple bars 1110 or 1222.

According to an embodiment, prior to screen expansion or screen contraction of the flexible display 210, 310, 410, or 1210, no current may be supplied to the third coils 1426 overlapping the third multiple bars 1130 or 1226 among the multiple coils 454 or 1420.

According to an embodiment, the first multiple bars 1110 or 1222, the second multiple bars 1120 or 1224, and the third multiple bars 1130 or 1226 may be fixed to the current positions thereof.

According to an embodiment, during screen expansion of the flexible display 210, 310, 410, or 1210, a first current may be applied to the first coils 1422 overlapping the first multiple bars 1110 or 1222 having the first polarity among the multiple coils 454 or 1420 to generate a repulsive force between the first coils 1422 and the first multi-bars 1110 or 1222, and the first multi-bars 1110 or 1222 may be moved in the first direction.

According to an embodiment, during screen expansion of the flexible display 210, 310, 410, or 1210, a second current opposite to the first current may be applied to the second coils 1424 overlapping the second multiple bars 1120 or 1224 having the second polarity among the multiple coils 454 or 1420 to generate a repulsive force between the second coils 1422 and the second multiple bars 1120 or 1224, and the second multiple bars 1120 or 1224 may be moved in the first direction.

According to an embodiment, during screen expansion of the flexible display 210, 310, 410, or 1210, a first current may be applied to the third coils 1426 overlapping the third multiple bars 1120 or 1224 among the multiple coils 454 or 1420 to generate a repulsive force between the third coils and the first multiple bars 1110 or 1222 and an attractive force between the third coils and the second multiple bars 1120 or 1224, and the first multiple bars 1110 or 1222 and the second multiple bars 1120 or 1124 may be moved in the first direction.

The disclosure has been shown and described with reference to various embodiments thereof, but those skilled in the art will appreciate that various modifications and changes may be made to the forms and details of the disclosure without departing from the scope of the disclosure. The scope of the disclosure is defined by the appended claims thereof.

## Claims

1. An electronic device comprising:
a flexible display (410, 1210) comprising a first area (411) disposed to be visible from outside, and a second area (412) extending from the first area, accommodated inside in a slide-in state, and disposed to be visible from outside in a slide-out state;
a support member (420, 1100) disposed on a rear surface of the flexible display (410, 1210) to support the flexible display in the slide-in state and the slide-out state;
a shaft bracket (440) disposed under the support member (420, 1100);
a coil assembly (450, 1400) coupled to one side of the shaft bracket (440) and configured to generate a driving force for moving the support member (420, 1100) in a first direction or in a second direction opposite to the first direction, the coil assembly being disposed to correspond to a central portion (414) of the flexible display; and
a printed circuit board (472, 1700) on which an electronic component configured to supply a driving current to the coil assembly (450, 1400) is disposed.

2. The electronic device of claim 1, wherein the support member (420, 1100) comprises first multiple bars (1110, 1222), second multiple bars (1120, 1224), and third multiple bars (1130, 1226) disposed between the first multiple bars (1110, 1222) and the second multiple bars (1120, 1224) to shield the first multiple bars (1110, 1222) and the second multiple bars (1120, 1224).

3. The electronic device of claim 2, wherein the first multiple bars (1110, 1222) comprise first magnetic polarity portions (1222a) having a first magnetic polarity at a side closer to the flexible display (1210), and second magnetic polarity portions (1222b) having a second magnetic polarity opposite to the first magnetic polarity at a side farther from the flexible display.

4. The electronic device of one of claims 2 to 3, wherein the second multiple bars (1120, 1224) comprise:
first magnetic polarity portions (1224a) having a first magnetic polarity at a side farther from the flexible display (1210); and
second magnetic polarity portions (1224b) having a second magnetic polarity opposite to the first magnetic polarity at a side closer to the flexible display.

5. The electronic device of one of claims 2 to 4, wherein the third multiple bars (1130, 1226) include a magnetic shield material.

6. The electronic device of claim 5, wherein the magnetic shield material (1130, 1226) comprises a cold-rolled steel plate, steel plate cold commercial, SPCC.

7. The electronic device of one of claims 2 to 5, wherein the coil assembly (450, 1400) is disposed to overlap the first multiple bars (1222), the second multiple bars (1224), and the third multiple bars (1226).

8. The electronic device of one of claims 2 to 5, wherein the coil assembly (450, 1400) comprises multiple coils (1420; 1422, 1424) configured to generate a repulsive force or attractive force with the first multiple bars (1222) and to generate a repulsive force or attractive force with the second multiple bars (1224) depending on to a direction of a current input thereto.

9. The electronic device of one of claims 1 to 8, wherein the coil assembly (450, 1400) comprises:
a coil bracket (1410) on which the multiple coils (1420; 1422, 1424, 1426) are disposed, and
a flexible circuit board (1430) electrically connected to the printed circuit board (1700) to supply a current to the multiple coils (1420; 1422, 1424, 1426).

10. The electronic device of claim 8, wherein the multiple coils (1420; 1422, 1424, 1426) comprise first coils (1422), second coils (1424), and third coils (1426) each having magnetic polarity that change depending upon a first period or a second period,
the first coils (1422) being positioned to correspond to the first multiple bars (1222);
the second coils (1424) being positioned to correspond to the second multiple bars (1224); and
the third coils (1426) being positioned to correspond to the third multiple bars (1226).

11. The electronic device of claim 10, wherein during the first period, a first current flowing in
a first direction is supplied to the first coils (1422) and a current flowing in a second direction opposite to the first direction is supplied to the second coils (1424), and
during the second period, a second current flowing in the second direction is supplied to the first coils (1422) and a current flowing in the first direction opposite to the second direction is supplied to the second coils (1424).

12. The electronic device of one of claims 10 to 11, wherein by a current supplied to the first coils (1422), the second coils (1424), or the third coils (1426), the multiple bars (1222, 1226, 1224) are moved in a first direction, in a second direction opposite to the first direction, or fixed to current positions.

13. The electronic device of one of claims 10 to 12, wherein prior to screen expansion or screen contraction of the flexible display, a first current is supplied to the first coils (1422) overlapping the first multiple bars (1222) among the multiple coils to generate an attractive force between the first coils (1422) and the first multiple bars (1222, 1222b),
wherein prior to screen expansion or screen contraction of the flexible display, a second current is supplied to the second coils (1424) overlapping the second multiple bars (1224) among the multiple coils to generate an attractive force between the second coils (1424) and the first multiple bars (1224, 1224a), wherein prior to screen expansion or screen contraction of the flexible display, no current is supplied to the third coils (1426) overlapping the third multiple bars (1226) among the multiple coils, and
wherein the first multiple bars (1222), the second multiple bars (1224), and the third multiple bars (1226) are fixed to current positions thereof.

14. The electronic device of one of claims 10 to 13,
wherein during screen expansion of the flexible display,
a first current is applied to first coils (1422) overlapping the first multiple bars (1222) having the first magnetic polarity among the multiple coils to generate a repulsive force between the first coils (1422) and the first multiple bars (1222),
the first multiple bars are moved in the first direction, and
wherein during screen expansion of the flexible display,
a second current opposite to the first current is applied to the second coils (1424) overlapping the second multiple bars (1224) having the second magnetic polarity among the multiple coils to generate a repulsive force between the second coils (1424) and the second multiple bars (1224), and
the second multiple bars are moved in the first direction.

15. The electronic device of one of claims 10 to 14,
wherein during screen expansion of the flexible display, a first current is applied to third coils (1426) overlapping the third multiple bars (1226) among the multiple coils to generate a repulsive force between the third coils (1426) and the first multiple bars (1222) and an attractive force between the third coils (1426) and the second multiple bars (1224), and
the first multiple bars (1222) and the second multiple bars (1224) are moved in the first direction.

## Patentansprüche

1. Elektronisches Gerät, umfassend:
eine flexible Anzeige (410, 1210) mit einem ersten Bereich (411), der von außen sichtbar angeordnet ist, und einem zweiten Bereich (412), der sich vom ersten Bereich aus erstreckt, in einem eingeschobenen Zustand im Inneren untergebracht ist und in einem herausgeschobenen Zustand von außen sichtbar angeordnet ist;
ein Stützelement (420, 1100), das an einer Rückseite der flexiblen Anzeige (410, 1210) angeordnet ist, um die flexible Anzeige in dem eingeschobenen Zustand und dem herausgeschobenen Zustand zu stützen;
eine Wellenhalterung (440), die unter dem Stützelement (420, 1100) angeordnet ist;
eine Spulenbaugruppe (450, 1400), die mit einer Seite der Wellenhalterung (440) gekoppelt und dazu konfiguriert ist, eine Antriebskraft zum Bewegen des Stützelements (420, 1100) in einer ersten Richtung oder in einer zweiten Richtung entgegengesetzt zur ersten Richtung zu erzeugen, wobei die Spulenbaugruppe so angeordnet ist, dass sie einem mittleren Abschnitt (414) der flexiblen Anzeige entspricht; und
eine Leiterplatte (472, 1700), auf der eine elektronische Komponente angeordnet ist, die dazu konfiguriert ist, die Spulenbaugruppe (450, 1400) mit einem Antriebsstrom zu versorgen.

2. Elektronisches Gerät nach Anspruch 1, wobei das Stützelement (420, 1100) erste Mehrfachstangen (1110, 1222), zweite Mehrfachstangen (1120, 1224) und dritte Mehrfachstangen (1130, 1226) umfasst, die zwischen den ersten Mehrfachstangen (1110, 1222) und den zweiten Mehrfachstangen (1120, 1224) angeordnet sind, um die ersten Mehrfachstangen (1110, 1222) und die zweiten Mehrfachstangen (1120, 1224) abzuschirmen.

3. Elektronisches Gerät nach Anspruch 2, wobei die ersten Mehrfachstangen (1110, 1222) erste Magnetpolaritätsabschnitte (1222a) mit einer ersten Magnetpolarität an einer Seite, die näher an der flexiblen Anzeige (1210) liegt, und zweite Magnetpolaritätsabschnitte (1222b) mit einer zweiten Magnetpolarität, die der ersten Magnetpolarität entgegengesetzt ist, an einer Seite, die weiter von der flexiblen Anzeige entfernt ist, umfassen.

4. Elektronisches Gerät nach einem der Ansprüche 2 bis 3, wobei die zweiten Mehrfachstangen (1120, 1224) Folgendes umfassen:
erste Magnetpolaritätsabschnitte (1224a) mit einer ersten Magnetpolarität an einer Seite, die weiter von der flexiblen Anzeige (1210) entfernt ist; und
zweite Magnetpolaritätsabschnitte (1224b) mit einer zweiten Magnetpolarität, die der ersten Magnetpolarität entgegengesetzt ist, an einer Seite, die näher an der flexiblen Anzeige liegt.

5. Elektronisches Gerät nach einem der Ansprüche 2 bis 4, wobei die dritten Mehrfachstangen (1130, 1226) ein magnetisches Abschirmmaterial umfassen.

6. Elektronisches Gerät nach Anspruch 5, wobei das magnetische Abschirmmaterial (1130, 1226) eine kaltgewalzte Stahlplatte, eine handelsübliche kaltgewalzte Stahlplatte (kurz: SPCC) umfasst.

7. Elektronisches Gerät nach einem der Ansprüche 2 bis 5, wobei die Spulenbaugruppe (450, 1400) so angeordnet ist, dass sie die ersten Mehrfachstangen (1222), die zweiten Mehrfachstangen (1224) und die dritten Mehrfachstangen (1226) überlappt.

8. Elektronisches Gerät nach einem der Ansprüche 2 bis 5, wobei die Spulenbaugruppe (450, 1400) mehrere Spulen (1420; 1422, 1424) umfasst, die dazu konfiguriert sind, in Abhängigkeit von einer Richtung eines in sie eingespeisten Stroms eine Abstoßungskraft oder Anziehungskraft mit den ersten Mehrfachstangen (1222) und eine Abstoßungskraft oder Anziehungskraft mit den zweiten Mehrfachstangen (1224) zu erzeugen,.

9. Elektronisches Gerät nach einem der Ansprüche 1 bis 8, wobei die Spulenbaugruppe (450, 1400) Folgendes umfasst:
eine Spulenhalterung (1410), auf der die mehreren Spulen (1420; 1422, 1424, 1426) angeordnet sind, und
eine flexible Schaltplatte (1430), die elektrisch mit der Leiterplatte (1700) verbunden ist, um die mehreren Spulen (1420; 1422, 1424, 1426) mit einem Strom zu versorgen.

10. Elektronisches Gerät nach Anspruch 8, wobei die mehreren Spulen (1420; 1422, 1424, 1426) erste Spulen (1422), zweite Spulen (1424) und dritte Spulen (1426) umfassen, die jeweils eine magnetische Polarität aufweisen, die sich in Abhängigkeit von einer ersten Periode oder einer zweiten Periode ändert,
wobei die ersten Spulen (1422) so positioniert sind, dass sie den ersten Mehrfachstangen (1222) entsprechen;
wobei die zweiten Spulen (1424) so positioniert sind, dass sie den zweiten Mehrfachstangen (1224) entsprechen; und
wobei die dritten Spulen (1426) so positioniert sind, dass sie den dritten Mehrfachstangen (1226) entsprechen.

11. Elektronisches Gerät nach Anspruch 10, wobei während der ersten Periode ein erster Strom, der in einer ersten Richtung fließt, den ersten Spulen (1422) und ein Strom, der in einer zweiten Richtung entgegengesetzt zur ersten Richtung fließt, den zweiten Spulen (1424) zugeführt wird, und
während der zweiten Periode ein zweiter Strom, der in der zweiten Richtung fließt, den ersten Spulen (1422) und ein Strom, der in der ersten Richtung entgegengesetzt zur zweiten Richtung fließt, den zweiten Spulen (1424) zugeführt wird.

12. Elektronisches Gerät nach einem der Ansprüche 10 bis 11, wobei durch einen den ersten Spulen (1422), den zweiten Spulen (1424) oder den dritten Spulen (1426) zugeführten Strom die Mehrfachstangen (1222, 1226, 1224) in einer ersten Richtung oder in einer zweiten Richtung entgegengesetzt zur ersten Richtung bewegt werden oder an aktuellen Positionen fixiert sind.

13. Elektronisches Gerät nach einem der Ansprüche 10 bis 12, wobei vor der Bildschirmerweiterung oder Bildschirmverkleinerung der flexiblen Anzeige ein erster Strom an die ersten Spulen (1422) unter den mehreren Spulen angelegt wird, die die ersten Mehrfachstangen (1222) überlappen, um eine Anziehungskraft zwischen den ersten Spulen (1422) und den ersten Mehrfachstangen (1222, 1222b) zu erzeugen,
wobei vor der Bildschirmerweiterung oder Bildschirmverkleinerung der flexiblen Anzeige ein zweiter Strom an die zweiten Spulen (1424) unter den mehreren Spulen angelegt wird, die die zweiten Mehrfachstangen (1224) überlappen, um eine Anziehungskraft zwischen den zweiten Spulen (1424) und den ersten Mehrfachstangen (1224, 1224a) zu erzeugen,
wobei vor der Bildschirmerweiterung oder Bildschirmverkleinerung der flexiblen Anzeige kein Strom an die dritten Spulen (1426) unter den mehreren Spulen angelegt wird, die die dritten Mehrfachstangen (1226) überlappen, und
wobei die ersten Mehrfachstangen (1222), die zweiten Mehrfachstangen (1224) und die dritten Mehrfachstangen (1226) an ihren aktuellen Positionen fixiert sind.

14. Elektronisches Gerät nach einem der Ansprüche 10 bis 13,
wobei während der Bildschirmerweiterung der flexiblen Anzeige
ein erster Strom an erste Spulen (1422) unter den mehreren Spulen angelegt wird, die die ersten Mehrfachstangen (1222) mit der ersten Magnetpolarität überlappen, um eine Abstoßungskraft zwischen den ersten Spulen (1422) und den ersten Mehrfachstangen (1222) zu erzeugen,
die ersten Mehrfachstangen in der ersten Richtung bewegt werden und
wobei während der Bildschirmerweiterung der flexiblen Anzeige
ein zweiter Strom, der dem ersten Strom entgegengesetzt ist, an die zweiten Spulen (1424) unter den mehreren Spulen angelegt wird, die die zweiten Mehrfachstangen (1224) mit der zweiten Magnetpolarität überlappen, um eine Abstoßungskraft zwischen den zweiten Spulen (1424) und den zweiten Mehrfachstangen (1224) zu erzeugen, und
die zweiten Mehrfachstangen in der ersten Richtung bewegt werden.

15. Elektronisches Gerät nach einem der Ansprüche 10 bis 14,
wobei während der Bildschirmerweiterung der flexiblen Anzeige ein erster Strom an dritte Spulen (1426) unter den mehreren Spulen angelegt wird, die die dritten Mehrfachstangen (1226) überlappen, um eine Abstoßungskraft zwischen den dritten Spulen (1426) und den ersten Mehrfachstangen (1222) und eine Anziehungskraft zwischen den dritten Spulen (1426) und den zweiten Mehrfachstangen (1224) zu erzeugen, und
die ersten Mehrfachstangen (1222) und die zweiten Mehrfachstangen (1224) in der ersten Richtung bewegt werden.

## Revendications

1. Dispositif électronique comprenant :
un affichage flexible (410, 1210) comprenant une première zone (411) agencée pour être visible depuis l'extérieur, et une deuxième zone (412) se prolongeant depuis la première zone, logée à l'intérieur dans un état coulissant à l'intérieur, et agencé pour être visible depuis l'extérieur dans un état coulissant à l'extérieur ;
un élément de soutien (420, 1100) agencé sur une surface arrière de l'affichage flexible (410, 1210) pour soutenir l'affichage flexible à l'état coulissant à l'intérieur et à l'état coulissant à l'extérieur ;
un support d'arbre (440) agencé sous l'élément de soutien (420, 1100);
un ensemble bobine (450, 1400) couplé à un côté du support d'arbre (440) et configuré pour générer une force d'entraînement pour déplacer l'élément de soutien (420, 1100) dans une première direction ou dans une deuxième direction opposée à la première direction, l'ensemble bobine étant agencé pour correspondre à une portion centrale (414) de l'affichage flexible ; et
une carte de circuit imprimé (472, 1700) sur laquelle un composant électronique configuré pour fournir un courant d'entraînement à l'ensemble bobine (450, 1400) est agencé.

2. Dispositif électronique selon la revendication 1, dans lequel l'élément de soutien (420, 1100) comprend des premières barres multiples (1110, 1222), des deuxièmes barres multiples (1120, 1224), et des troisièmes barres multiples (1130, 1226) agencées entre les premières barres multiples (1110, 1222) et les deuxièmes barres multiples (1120, 1224) pour faire écran aux premières barres multiples (1110, 1222) et aux deuxièmes barres multiples (1120, 1224).

3. Dispositif électronique selon la revendication 2, dans lequel les premières barres multiples (1110, 1222) comprennent des premières parties à polarité magnétique (1222a) munies d'une première polarité magnétique sur le côté proximal de l'affichage flexible (1210), et des deuxièmes parties à polarité magnétique (1222b) munies d'une deuxième polarité magnétique opposée à la première polarité magnétique sur un côté plus distal de l'affichage flexible.

4. Dispositif électronique selon l'une quelconque des revendications 2 à 3, dans lequel les deuxièmes barres multiples (1120, 1224) comprennent :
des premières parties à polarité magnétique (1224a) munies d'une première polarité magnétique sur le côté distal de l'affichage flexible (1210) ; et
des deuxièmes parties à polarité magnétique (1224b) munies d'une deuxième polarité magnétique opposée à la première polarité magnétique sur un côté proximal de l'affichage flexible.

5. Dispositif électronique selon l'une quelconque des revendications 2 à 4, dans lequel les troisièmes barres multiples (1130, 1226) incluent un matériau écran magnétique.

6. Dispositif électronique selon la revendication 5, dans lequel le matériau écran magnétique (1130, 1226) comprend une plaque d'acier laminée à froid, plaque d'acier froid commercial (steel plate cold commercial, SPCC).

7. Dispositif électronique selon l'une quelconque des revendications 2 à 5, dans lequel l'ensemble bobine (450, 1400) est agencé afin de chevaucher les premières barres multiples (1222), les deuxièmes barres multiples (1224), et les troisièmes barres multiples (1226).

8. Dispositif électronique selon l'une quelconque des revendications 2 à 5, dans lequel l'ensemble bobine (450, 1400) comprend de multiples bobines (1420 ; 1422, 1424) configurées pour générer une force répulsive ou une force attractive avec les premières barres multiples (1222) et pour générer une force répulsive ou une force attractive avec les deuxièmes barres multiples (1224) selon la direction du courant qui y est fait passer.

9. Dispositif électronique selon l'une quelconque des revendications 1 à 8, dans lequel l'ensemble bobine (450, 1400) comprend :
un support de bobine (1410) sur lequel les multiples bobines (1420 ; 1422, 1424, 1426) sont agencées, et
une carte de circuit flexible (1430) raccordée électriquement à la carte de circuit imprimé (1700) afin d'alimenter les bobines multiples (1420 ; 1422, 1424, 1426) en courant.

10. Dispositif électronique selon la revendication 8, dans lequel les bobines multiples (1420 ; 1422, 1424, 1426) comprennent des premières bobines (1422), des deuxièmes bobines (1424), et des troisièmes bobines (1426) chacune munie d'une polarité magnétique qui change en fonction d'une première période ou d'une deuxième période,
les premières bobines (1422) étant positionnées afin de correspondre aux premières barres multiples (1222) ;
les deuxièmes bobines (1424) étant positionnées afin de correspondre aux deuxièmes barres multiples (1224) ; et
les troisièmes bobines (1426) étant positionnées afin de correspondre aux troisièmes barres multiples (1226).

11. Dispositif électronique selon la revendication 10, dans lequel durant la première période, un premier courant s'écoulant dans une première direction est fourni aux premières bobines (1422) et un courant s'écoulant dans une deuxième direction opposée à la première direction est fourni aux deuxièmes bobines (1424), et
durant la deuxième période, un deuxième courant s'écoulant dans la deuxième direction est fourni aux premières bobines (1422) et un courant s'écoulant dans la première direction opposée à la deuxième direction est fourni aux deuxièmes bobines (1424).

12. Dispositif électronique selon l'une quelconque des revendications 10 à 11, dans lequel grâce à un courant fourni aux premières bobines (1422), aux deuxièmes bobines (1424), ou aux troisièmes bobines (1426), les barres multiples (1222, 1226, 1224) sont déplacées dans une première direction, dans une deuxième direction opposée à la première direction, ou fixées sur les positions actuelles.

13. Dispositif électronique selon l'une quelconque des revendications 10 à 12, dans lequel avant expansion d'écran ou contraction d'écran de l'affichage flexible, un premier courant est fourni aux premières bobines (1422) chevauchant les premières barres multiples (1222) parmi les barres multiples pour générer une force attractive entre les premières bobines (1422) et les premières barres multiples (1222, 1222b),
dans lequel avant expansion d'écran ou contraction d'écran de l'affichage flexible, un deuxième courant est fourni aux deuxièmes bobines (1424) chevauchant les deuxièmes barres multiples (1224) parmi les barres multiples pour générer une force attractive entre les deuxièmes bobines (1424) et les premières barres multiples (1224, 1224a),
dans lequel avant expansion d'écran ou contraction d'écran de l'affichage flexible, aucun courant n'est fourni aux troisièmes bobines (1426) chevauchant les troisièmes barres multiples (1226) parmi les bobines multiples, et
dans lequel les premières barres multiples (1222), les deuxièmes barres multiples (1224), et les troisièmes barres multiples (1226) sont fixées sur leurs positions actuelles.

14. Dispositif électronique selon l'une quelconque des revendications 10 à 13,
dans lequel durant l'expansion d'écran de l'affichage flexible,
un premier courant est appliqué aux premières bobines (1422) chevauchant les premières barres multiples (1222) de sorte que la première polarité magnétique parmi les bobines multiples génère une force répulsive entre les premières bobines (1422) et les premières barres multiples (1222),
les premières barres multiples sont déplacées dans la première direction, et
dans lequel durant l'expansion d'écran de l'affichage flexible,
un deuxième courant opposé au premier courant est appliqué aux deuxièmes bobines (1424) chevauchant les deuxièmes barres multiples (1224) de sorte que la deuxième polarité magnétique parmi les bobines multiples génère une force répulsive entre les deuxièmes bobines (1424) et les deuxièmes barres multiples (1224), et
les deuxièmes barres multiples sont déplacées dans la première direction.

15. Dispositif électronique selon l'une quelconque des revendications 10 à 14,
dans lequel durant l'expansion d'écran de l'affichage flexible, un premier courant est appliqué aux troisièmes bobines (1426) chevauchant les troisièmes barres multiples (1226) parmi les bobines multiples afin de générer une force répulsive entre les troisièmes bobines (1426) et les premières barres multiples (1222) et une force attractive entre les troisièmes bobines (1426) et les deuxièmes barres multiples (1224), et
les premières barres multiples (1222) et les deuxièmes barres multiples (1224) sont déplacées dans la première direction.
